(19) Europäisches Patentamt
European Patent Office
Office européen des brevets

(11) Publication number: **0 622 729 A2**

# (12) EUROPEAN PATENT APPLICATION

(21) Application number: **94105294.6**

(51) Int. Cl.[5]: **G06F 9/44**

(22) Date of filing: **06.04.94**

(30) Priority: **29.04.93 US 54808**

(43) Date of publication of application:
**02.11.94 Bulletin 94/44**

(84) Designated Contracting States:
**DE FR GB**

(71) Applicant: **INTERNATIONAL BUSINESS MACHINES CORPORATION**
**Old Orchard Road**
**Armonk, N.Y. 10504 (US)**

(72) Inventor: **Oldfield, William T.**
**P.O. BOX 1966**
**Kingston, New York 12401 (US)**
Inventor: **Wierwille, Robert L.**
**8011 Ute Highway**
**Longmont, CO 80503 (US)**
Inventor: **Wiss, Richard**
**1690 Oak Avenue**
**Boulder, CO 80304 (US)**
Inventor: **Scott, Chris**
**P.O. BOX 1643**
**Berthoud, CO 80513 (US)**
Inventor: **Toland, Barbara**
**1791 Tyler Avenue**
**Louisville, CO 80027 (US)**
Inventor: **White, Ronald B.**
**12754 Boulder Street**
**Boulder Creek, CA 95006 (US)**

(74) Representative: **Kirchhof, Norbert, Ing. grad.**
**IBM Deutschland Informationssysteme GmbH**
**Patentwesen und Urheberrecht**
**D-70548 Stuttgart (DE)**

## (54) A user interface builder for a user interface server.

(57) The present invention relates generally to building or editing of user interfaces for computer systems. The user interfaces created and edited are independent of any particular windowing system and do not need to be compiled to use. The user interface implementation can easily be ported from one system to another. The user interfaces are stored in a display object store and can be utilized by applications via a user interface server.



Rank Xerox (UK) Business Services
(3.10/3.09/3.3.4)

CROSS-REFERENCE TO RELATED APPLICATIONS

The present application is related to application serial number 08/049 697 filed on 16 April 1993, entitled "Dynamic Sharing of User Interfaces" by inventors R. Wiss and J. Stucka (Docket number BT 9-92-023), incorporated herein by reference. The present application is also related to application serial number 08/049 700 filed on 16 April 1993, entitled "User Interface Server" by inventors R. Wiss, W. Oldfield, and R. Wierwille (Docket number BT9-92-024), incorporated herein by reference.

FIELD OF THE INVENTION

This invention relates generally to building or editing of user interfaces for computer systems. In particular the interactive building and editing of graphical user interfaces.

BACKGROUND OF THE INVENTION

An application interacts with a user via a user interface. A graphical user interface (GUI) allows a user to interact with a computer using graphics, images, data and text together with some form of pointing device. The GUI is an improvement over the traditional text display and alphanumeric keyboard input device. One of the more popular pointing devices used by a GUI is the mouse. The mouse input device complements the keyboard which can be used for traditional text input and display. The GUI's graphical images are chosen to be intuitive for ease of use, such as a push-button labeled with the image of a file cabinet to denote the action of saving a file. Individual components of the graphical user interface, such as a particular window or a push-button, are selected by using the mouse or any other supported pointing device. Other pointing devices include tablets, touch screen, touch screen overlays, track balls, joy sticks, light pens, thumb wheels etc.

A window management system provides many of the important features of modern user computer interfaces.
A window management system allows multiple applications to interact with the use r on a single computer display, and provides low level functions for the application to display data an d collect input from the user. The window management system permits application programs to show results in different areas of the display, to resize the screen areas in which those applications are executing, to pop-up and to pull-down menus. The window management system is a resource manager in much the same way that an operating system is a resource manager, only the types of resources differ. The window management system allocates the resources of screen area to various applications that seek to use the screen and then assists in man aging these screen areas so that the applications do not interfere with one another. The window management system al so allocates the resources of interaction devices to applications that require a user input and then routes the flow of input information from the devices to the event queue of the appropriate application for which the input is destined.

The look and feel of the user computer interface is determined largely by the collection of interaction techniques provided for it. Designing and implementing interaction techniques f or each individual application would be a time consuming and expensive task. Furthermore, each application would end up with a different look and feel making it difficult for a user to move from one application to another. Applications sharing a common window management system can utilize a common interactive technique toolkit built for the window management system to assure a common look and feel. An interactive technique toolkit consists of a set of subroutines that provide different types of display objects.

Interactive technique toolkits, which are subroutine libraries of interaction techniques, are mechanisms for making a collection of techniques available for use by application programs. By using interactive technique toolkits, a consistent look and feel among application programs sharing a common window management system can be insured. Using the same toolkit across all applications is a commonly use d approach for providing a look and feel that unifies both multiple applications and the window environment itself. For instance, the menu style used to select window operations should be the same style used within all applications. Interactive technique toolkits are available for specific windowing management systems. Basic elements of the toolkit can include menus, dialog boxes, scroll bars, file selection boxes and the like, all which c an be conveniently implemented in windows.

Most GUI's are developed on a personal computer or workstation using an interactive design tool (IDT), which responds in real time to the application developer's requests. There are several interactive design tools available (i.e., Builder Xcessory for OSF/Motif and Xt Intrinsics based user interfaces, Easel for Presentation Manager, Aix Interface Composer and UIM/X). A "what you see is what you get" (WYSIWYG) Interface Design Tool allows the application developer to see how the final user interface will actually look as he or she is developing it. (As another example of a WYSIWYG application, a WYSIWYG text editor shows the final form of a document as you are creating it, rather than requiring a separate formatting step to see what the text will actually look like when it is printed.) The Interface Design Tool is based on a particular windowing system with a particular interactive toolkit. The user interface developed using an IDT is the n compiled with other application functions to yield the application. The user interface created by the IDT for a given application will only work with the window management system supported by the IDT. Also, the IDT generates code as output. This code must be compiled and linked to the application in order to run the application's user interface.

Changes are required to the application in order to permit the application to r un its user interface under a different window management system then that supported by the IDT. Thus, to run an application developed for one windowing system in a different windowing system, the application developer must rewrite the part of the application that communicates with the windowing system. Thus, the developer modifies the output of the IDT to make it work with the new window management system. Alternatively, the developer could also use an IDT that provides support for the new window management system to recreate the user interface. Current IDT's do not provide a user interface that can be used with multiple window management systems without requiring compilation of the user interfaces they output.

As was stated previously, the application developer could write or rewrite the user interface portion of an application each time the application was required to work with a different wind ow management systems. In addition to requiring rewriting of the user interface, it also requires the application developer to know the specialized window management system commands and be able to write in a compiled language. It also results in different versions of the user interface for different window management systems. This leads to maintenance and change control problems.

The application developer could also use a tool such as eXtensible Virtual Tool kit (XVT), available from XVT software Boulder Colorado. This tool allows the developer to generate a high level description of a user interface consisting of high level user interface commands. Portability is provided by compiling the high level user interface commands, generated by the tool, into commands for the desired windowing management systems. This alternative results in duplicate representations of the same user interface for different window management systems, and requires a separate compilation step for each window management system.

The IDT's also do not provide support for interpretive applications. The IDT's generate source code that must be compiled in order for the application to make use of the user interfaces created with the IDT. This compilable representation of the user interface does not allow an interpretative application to directly use the compiled user interface. In order for the application to make use of the user interfaces created by the IDT, some form of communication must be provided from the interpretative application to the compilable representation of the user interface. This requires the application developer to have knowledge o f a compiled language such as C, and to know how to tie that language to the interpretive environment.

## SUMMARY OF THE INVENTION

The present invention is directed to a method and apparatus that satisfies these needs.

It is an object of the invention to simplify the creation and maintenance of user interfaces.

It is an object of this invention to create user interfaces that are independent of any particular windowing system or interactive toolkit.

It is another object of this invention to edit user interfaces that are independent of any particular windowing system or interactive toolkit.

It is therefore an object of this invention to simplify the development of user interfaces and their applications.

It is a further object of this invention to simplify the maintenance of user interfaces and their applications.

It is an object of this invention to provide for an application to be written s o that it can be easily run with a variety of different window management systems without revising the application' s source code.

It is yet another object of the invention to provide for the dynamic loading of portions of a user interface.

It is still another object to provide interpretive applications with windowing management system support.

It is another object of the invention to provide for a common look and feel across applications regardless of the platform or window management system implementation.

The foregoing and other objects of the invention are accomplished by an apparat us and method providing for an interface editor that creates user interfaces and stores the user interfaces in a display object store. The interface editor also retrieves user interfaces from the display object store, editing the retrieved user interface and storing the edited user interface in the display object store. The interface editor provides for the interactive design of a user interface with a WYSIWYG representation of the user interface being designed and a hierarchical representation of the user interface components. The interface editor permits the developer to add user interface components in the existing user interface component hierarchy, to delete user interface components or groups of user interface components (i.e., sub-hierarchies or sub-trees of user interface components), to move user interface components and group of user interface components, to copy user interface components and group of user interface components and to change the resource values associated with individual user interface components. It allows for user interfaces to be independent of the windowing system. Applications utilize the user interfaces stored in the display object store via a user interface server. The user interface server loads interfaces and supports the interaction between the user and the application such that a) a mechanism is provided for the application to dynamically modify and query user interfaces loaded by the user interface server from the display object and b) permits different applications to share the same user interface. This invention isolates the application from the details of the particular windowing system, so that the sam e version of the application can be run on different windowing systems. This is accomplished by tying together the interface editor and the user interface server through a single interface representation that is independent o f the windowing system stored in a display object store. This also supports applications that run in an interpretive environment, and provides a way to develop and run user interfaces without compilation.

## BRIEF DESCRIPTION OF THE DRAWING

These and other objects, features, aspects, and advantages of the present invention will become better understood with regard to the following description, appended claims and accompanying drawings where:

FIG 1a is an architectural block diagram of a computer system depicting the memory having read therein a series of applications, a interface editor, a user interface server, a display object store, window management and an operating system.

FIG 1b is an architectural block diagram of a computer system depicting the memory having read therein a interface editor, a display object store, window management and an operating system.

FIG 1c is an architectural block diagram showing three separate interconnected computer systems.

FIG 2a shows a block diagram depicting the functional interrelationships of the interface editor, display object store, user interface server and window management system.

FIG 2b shows a block diagram depicting the functional relationships of the interface editor, the display object store and the window management system.

FIG 2c shows a block diagram depicting the functional relationships of the interface editor, display object store for a particular window management system.

FIG 3 shows the display object store with several interfaces.

FIG 4 shows a high-level data flow diagram for the interface editor.

FIG 5 shows the user interface for the interface editor.

FIG 6 shows the primary window of the interface editor.

FIG 7 shows the edit menu of the interface editor.

FIG 8 shows the active interface window of the interface editor.

FIG 9 shows the active component resource window of the interface editor.

FIG 10 shows the text resource editor dialog of the interface editor.

FIG 11 shows the color resource editor dialog of the interface editor.

FIG 12 shows selection of the 'menu bar' component type from the component creation control panel in the primary window of the interface editor.

FIG 13 shows selection of the 'menu choice' component type from the component creation control panel in the primary window of the interface editor .

FIG 14 shows the primary window after the 'menu choice' component type has been selected.

FIG 15 shows the active interface window of the interface editor with the menu bar and menu choice displayed.

FIG 16 shows the edit menu choice label in the active component resource window of the interface editor.

FIG 17 shows the active interface window of the interface editor with the menu bar and menu choice displayed after editing the menu choice's label.

FIG 18 shows the active interface window of the interface editor with the menu bar and additional menu choices.

FIG 19 shows the primary window of the interface editor with the menu bar and additional menu choices.

FIG 20 shows the user interface for the interface editor.

FIG 21 shows the primary window with the pull down menu and pull down menu choices added.

FIG 22 shows selection of test mode in the primary window of the interface edit or.

FIG 23 shows the active interface window in response to selection of the 'File' choice in the active interface window in test mode.

FIG 24 shows the interfaces pulldown menu from the main menu of the primary win dow of the interface editor.

## DETAILED DESCRIPTION OF THE INVENTION

### DEFINITIONS

"User Interface" is a hierarchy of user interface components. A user interface contains user interface components that comprise a graphical user interface. The term user interface may refer to the actual appearance on the display or a representation in working memory or a representation in the hierarchy may be a multi-level hierarchy with children having children. The root component is typically a primary window component. All other display components are children of the root. They may all be first generation children (i.e., a two level hierarchy) or multi-generational (i.e, mo re than two levels). The components are structured in a hierarchy, also referred to as a tree. An example of such a structure is a 'family tree' of genealogy. The components of the tree are connected to other tree components. T ree components can have a 'parent' (the component it belongs to) and 'children' (components that belong to it). A sub-hierarchy, or sub-tree, is any specified component and all the children under it including children's children, and so forth.

"User interface component" this term refers to the individual visual pieces of the interface or a representation thereof. A component can be either a high level component (i.e, a window) or a low level component (i.e, pushbuttons, menus, and text labels). Components may also be categorized by their relationship to other components. Container components refer to components that contain or control other components. Container components are described as being parents of the components that are within their control or within their physical boundaries. Primitive components make up the lowest level of a given hierarchy or sub-hierarchy and cannot contain other components. Composite components are groupings of container components and primitive type components.

"Resources" are associated with a user interface component. Resources refer to specific attributes of a given component. Examples of resources include its foreground color, background color, name, font, parent, pixmaps, icons etc. Some resources are common to all components, some are common to a sub set of components, and some are specific to a given type of component.

"Callbacks" are a special class of resources. Callbacks provide a means for associating application specific functionality with a user interface component. A callback is associated with a p articular user action in a component. Each component type which is responsive to user input supports one or more callback types. For example, an application would typically have some processing to perform when a user selects a push button displayed in the application's user interface. Typically two resources are specified for a particular callback type: the callback and the callback data. The application developer specifies the call backs required for the user interface when the application is created. The name of the application function for callbacks is stored with the user interface components in the display object store but can be modified by the application. "Display Object" is a data abstraction representing a visual characteristic or the visual characteristic itself. A display object can be a plurality of user interfaces, a single user interface, a plurality of user interface components, a hierarchy or sub-hierarchy of user interface components, a single user interface component or a resource such as a pixmap or icon.

"Command" includes the instruction to be executed along with any required data . For instance, a load command must specify the user interface to be loaded. The required data for the load command may consist of the name of the user interface or a reference to another location that contains the name or a reference to the user interface itself.

### OVERVIEW

The preferred embodiment of this invention comprises a set of computer programs for controlling the interaction between a user and a computer system as shown in the architectural b lock diagram of FIG 1a.

FIG 1a includes a central processing unit (CPU) 20 connected by means of a system bus 22 to a read only memory (ROM) 24 and a random access memory (RAM) 38. Also included in the computer system in FIG 1a are a display 28 by which the computer presents information to the user, and a plurality of input devices including a keyboard 26, mouse 34 and other devices that may be attached via input/output port 30. Other input devices such as other pointing devices or a voice sensors or image sensors may also be attached. Other input devices and pointing devices include tablets, numeric keypads, touch screen, touch screen overlays, track balls, joy sticks, light pens, thumb wheels etc. The I/O 30 can be connected to communications lines, disk storage, input devices, output devices or other I/O equipment.

The interface editor 49 is located in RAM 38. The interface editor 49 permits a developer to interactively create user interfaces and store the created user interfaces in a display object store 46. The interface editor 49 also retrieves user interfaces from the display object store 46, editing the retrieved user interface and storing the edited user interface in the display object store 46. The interface editor provides for the interactive design of a user interface with a WYSIWYG representation of the user interface being designed and a hierarchical representation of the user interface components. The interface editor 49 permit s the developer to add user interface components in the existing user interface component hierarchy, to delete user interface components or groups of user interface components (i.e., sub-hierarchies or sub-trees of user interface components), to move user interface components and group of user interface components, to copy user interface components and group of user interface components and to change the resource values associated with individual user interface components. It allows for user interfaces to be independent of the windowing management system 58.
Applications 50, 53, 54 utilize the user interfaces via a user interface server 48. By isolating the application from the details of the particular windowing system, the same user interface can be run on different windowing systems. The interface editor 49 utilizes a window management system interface 70 to provide access to the window management system 58. This enables the interface editor 49 to present and control the behavior of its user interface. It is the interface editor's user interface that allows the developer to create and edit user interfaces for applications. The interface editor 49 is also coupled to the Display Object Store 46. The interface editor 49 can read user interfaces from the display object store 46 or write user interfaces to the display object store 46.

The RAM 38 includes application A 50, application B 53, application Z 54. Each of these application programs utilizes a user interface server interface 52. The user interface serve r interface 52 allows applications to access functions and data contained in the user interface server 48. Examples of typical application programs would include a word processor, spreadsheets, graphic programs, electronic mail and data base programs. Also located in RAM 38 is the user interface server 48. The user interface server 48 utilizes a window management system interface 70 to provide access to the window management system 58. A display object store 46 contains user interfaces with each user interface containing a plurality of user interface components. The user interface server retrieves user interfaces and portions of user interfaces from the display object store 46 in response to application commands.

An operating system 74 is also included in RAM 38. Examples of operating systems include AIX] and OS/2]. The RAM 38 includes a window management system 58 such as the X window management system] for AIX] or Presentation manager] for OS/2. It is the operating system 74 in con junction with the window management system 58 that allows applications to be running concurrently and to share the same interaction devices. It is the user interface server 48 in conjunction with the display object store 46 that permits sharing of user interfaces and portions of user interfaces. It is the interface editor 49 that allows the developer to create, modify and delete user interfaces in the display object store 46. Other element s shown in RAM 38 include drivers 76 which interpret the electrical signals generated by devices such as t he keyboard and mouse.

A Working memory area 78 is also shown in RAM 38. The Working Memory Area 78 c an be utilized by any of the elements shown in RAM 38. The working memory area 78 can be utilized by t he applications (50, 53, 54), window management system 58, user interface server 48, interface editor 49, Operating System 74 and other functions. The working memory area 78 may be partitioned amongst the elements an d within an element. The working memory area 78 may be utilized for communication, buffering, temporary storage, or storage of data while a program is running. For instance, the interface editor 49 utilizes the working memory area 78 for loading and operating on user interfaces retrieved from the display object store 46. The working memory area 78 may also be utilized by the operating system for multi-tasking purposes. The working memory area 78 can be included as part of the application or it may be located in a common area. In either case there is no requirement that the working memory be contiguous in RAM 38.

The interface editor 49 and the user interface server 48 do not need to be located on the same computer system. FIG 1b depicts a computer system with the interface editor 49 without the user interface server or the applications. The descriptions of the elements for FIG 1a are the same for those in FIG 1B. The display object store 46 is shown in FIG 1b. However, as is shown in Fig 1c, the display object store can be located on a different computer system then either the interface editor 49 or the user interface server 48. Thus, the display object store 46 could be located on a file server with the interface editor 49 having read and write privileges and the user interface server 48 have read only privileges. FIG 1c shows the three interconnected computer system with the interface editor 49 located on system 1, the display object store 46 located on system 2, and the user interface server located on system 3. The systems could be interconnect by any standard computer network such as token ring or a local area network.

FIG 2a shows the functional relationships between the user interface server 48 coupled to the applications 50, 53, 54, the window management system 58, and the display object store 46 and also shows the interface editor 49 coupled to the window management system 58, and the display object store 46. FIG 2b shows the interface editor 49 coupled to the window management system 58, and the display object store 46.

The communication means 56 provides for the two way communication between the interface editor 49 and the window management system 58. The communicating means 56 also provides for two way communication between the user interface server and the applications and between the user interface server and the window management system. Interconnecting means 56 can be inter-process communications as provided by the operating system 74 or an alternative such as procedure calls or shared memory. Note that although the interconnecting means are labeled with same number in FIG 2a and FIG 2b, the interconnecting means are not required to be the same for each link.

The interface editor is coupled to the windowing management system 58 by interconnecting means 56. The user interface server 48 also is coupled to the windowing management system 58 b y interconnecting means 56. The window management system 58 provides the display management functions such a s displaying data and collecting input from the user via the input means. The Interface editor 49 and user interface server 48 both use the window management system independently of each other. As was shown in FIG 1c the user interface server 48, interface editor 49 and the display object store 46 can be located on separate interconnected systems. The interface editor 49 and User interface server 48 are not directly coupled to each other. The user interface server 48 can utilize user interfaces stored in the display object store 46 by the Interface editor 49.

The interface editor 49 and user interface server 48 communicate with the window management system via the Window Management System Interface 70. This window management system interface 7 0 is part of the interface editor 49 and the user interface server 48 and is dependent on the particular window management system 58 selected. Note that the user interface server 48 and the interface editor 49 may use entirely different window management systems. The interface editor 49 creates and edits user interfaces for storage and retrieval in the display object store 46. The interface editor could be implemented using any win dow management systems. The user interface server 48 makes use of the user interfaces stored in the display object store 46. It displays these user interfaces in response to commands sent from the applications it services. The user interface server 48 displays and controls the user interfaces using the windowing system. As long a s the user interface server 48 is ported to a window management system the developer using the interface editor 49 , using an entirely different window management system, can create user interfaces for use by the user interface server. The Interface editor 49 allows the developer to create interfaces for any windowing management system to which the user interface server 48 has been ported. The same user interface that is stored in the display object store 46 can be utilized with any number of different window management systems. The interface editor permits the creation of user interfaces that are independent of any window management system. This is a great advantage of the invention. By placing window management system specific functions in the user interface server, the applications are free from particular window management system dependencies.

The window management system interface 70 may consist of a set of library routines for interfacing with the window management system or a higher level interaction toolkit or both. An example for the X Windows system is shown in Fig 2c. Note that the interface editor 49 and the user interface server 48 may use different window management systems and may use different window management system interfaces. Thus, the user interface server may use an interaction toolkit while the interface editor may use no tool kit at all.

## THE INTERACTIVE INTERFACE EDITOR

The interface editor provides for the interactive creation and editing of user interfaces. The user interfaces created in this way are independent of any particular windowing environment. The interface editor allows application developers to interactively define user interfaces. Support is also provided for associating application callbacks with the user interface components of a user interface. The product o f the interface editor is the display object store representation of the application's user interface. The developer via the interface editor can store, retrieve, and delete interfaces from the display object store. Once an user interface is retrieved from the display object store, or created from scratch, it can be interactively manipulated by the developer in a What You See Is What You Get (WYSIWYG) fashion and returned to the display object store with any updates. These manipulations include user interface component creation, modification, and deletion. The interface editor permits the developer to add user interface components in the existing user interface component hierarchy, to delete user interface components or groups of user interface components, to move user interface components and group of user interface components, to copy user interface components and group of user interface components and to change the resource values associated with individual user interface components. The display object store versions of user interfaces are then loaded by the user interface server to create the run-time interface when an application is invoked.

The interface editor has its own user interface, completely distinct from the user interfaces stored in the display object store and used by the user interface server. Although, the interface edit or could utilize the user interface server for its own user interface. The only run-time interface between the Interface Manager and interface editor is an indirect one, through the display object store. This is shown in Fig 2a.

The interface editor provides an object-oriented technique for interactive use r interface development. The developer interacts with the interface editor through several independent window s. The interface editor supports development of one active interface at a time. There is no limit to the number of components that can be created for a given interface. The resources which can be modified for a given component are fixed and depend upon the component type.

The interface editor supports two modes of operation, design mode and test mode . The distinction lies in the reaction to input in the Active Interface Display (i.e, the WYSIWYG representation of the user interface under development). These modes affect how user interface events are handled during the interface editor session. In the first mode, 'design mode', the default windowing management system response to the user interface components in the active display window are replaced with interface editor responses. In the second mode, 'test mode', the user interface components exhibit their default 3-D behavior. For ex ample, in design mode, the user can click on a pushbutton, in the active display window, in order to select that pushbutton for the attribute updates. In test mode, clicking on the same pushbutton will cause it to look as if has actually been pressed. Similarly, clicking on a menu bar choice in test mode will cause the associated pulldown menu to appear, while clicking on it in design mode will select the pulldown menu component for update .

The interface editor supports mouse and keyboard manipulation of its user inter face. All functions can be accessed through the mouse or the keyboard, using the standard methods for input device interaction. A brief description of one embodiment of the keyboard access to the interface editor is as follows:

- o Press ALT-tab to move between the interface editor windows.
- o Press the F10 key to move the location cursor to the menu bar.
- o Use the Left and Right arrow buttons to move the location cursor between menu bar choices. The left and right arrows also move the location cursor between components in the hierarch y display area.
- o Use the up and down arrow buttons to move the location cursor between items i n a pulldown, popup or option menu. Also use the up and down arrow to move between the buttons in the component creation control panel.
- o To scroll the hierarchy display, position the location cursor in the scroll bars and use the up and down arrow keys.
- o Select an item in a menu by moving the location cursor to the desired choice (as described above) and pressing the enter key. An easier way to select a menu choice that has a mnemonic defined is to navigate to the menu, and then press the key defined as the mnemonic for the desired menu choice. Alternatively, press ALT-and the mnemonic to select a menu bar choice without first moving the location cursor to the menu bar.
- o Use the tab keys to move between the menu bar, the component creation buttons , the scroll bars and the hierarchy display in the primary window.
- o To avoid selecting any of the choices when a pulldown, popup or option menu i s displayed, press Esc key.

The following paragraphs describe the one embodiment of functional processes that comprise the high level data flow of the interface editor. Persons of ordinary skill in the art will recognize that alternative functional decompositions can be created to carryout the invention. Note, the term process is used in this section in the DeMarco methodology sense rather than in the UNIX process sense. A high level da ta flow diagram for this embodiment is shown in FIG 4.

This embodiment of the interface editor consists of the following processes: interface editor Control, Interface Manager, Resource Manager, and Component Manager. Each of these functions is described below.

interface editor Control is the top level process. It creates and manages the interface editor's user interface. The interface editor's user interface allows the developer to interact with the interface editor. The interface editor Control process interprets events from the developers's manipulation of the interface editor's user interface, and responds by invoking other components of the interface editor to handle specific tasks. The interface editor Control process also handles asynchronous errors encountered on behalf of the interface editor in the Window Management System.

The Interface Manager process provides the functions which operate on the external display object store representations of the user interfaces. It manages the display object store interface and invokes the operations which transform the display object store representation into the internal representation (and vice versa). The Interface Manager process provides the functions that operate on the representation of user interfaces in the display object store and provides the functions to load interfaces from the display object store into the working memory area and save user interfaces that were created or modified in the working memory to the display object store.

The Component Manager process provides the functions which operate on an intern al interface representation at the component level, including component creation, deletion, and modification . The Component Manager process provides the functions to display, dynamically query and modify the user interface and particular user interface components and the relationship of user interface components within the user interface being created or edited.

The Resource Manager process provides functions that manipulate component resource lists and allow interactive editing of individual resources for an active interface component. The Resource Manager process also provides functions to convert resource data between the internal and display object store formats. The Resource Manager process provides functions that manipulate the resources of a component of the user interface being created or edited.

TABLE II show high level pseudocode for this embodiment of the interface edit or.

```
TABLE II
main:
 initialize:
  call initialize_control
  call initialize_resource manager
  call initialize_storage manager
  call initialize_component manager
 process_edit_session:
  until user done
  call handle_user_request
  loop
 exit:
 call terminate_resource_manager
 call terminate_storage_manager
 call terminate_component_manager
 call terminate_control
 return

initialize_control:
 initialize interface to windowing system and Motif toolkit
load and init Editor Interface user interface
 create default user interface (primary window with default
     attribute values)
 display interface editor user interface and default user
interface   being created
 return

terminate_control:
 terminate connection to window manager and Motif toolkit
return

initialize_resource_editor:
 register callbacks for user interface units
 return

initialize_component_manager:
 retrieve text portions of user interface based on current
language   (e.g., English, French, etc.)
```

```
retrieve default attribute values
retrieve fonts and colors
return

terminate_component:
 free fonts and color resources
 return

initialize_storage_manager:
 retrieve bitmaps
 return

handle_user_request:
 determine_user_request
 Process_user_request
 return
```

The interface editor can be invoked through a start__interface__editor command. This command, in turn, invokes the interface editor's user interface. The start__interface__editor command is typically accessed through an icon in the Generic Application, although it can also be entered directly through the command line.

Upon invocation the interface editor is displayed and the interactive session begins. If an user interface was specified in the start__interface__editor, and the specified user interface cannot be loaded, the user will be notified of the error and the session will begin with the default interface primary window.

After processing the interface parameters and user preferences, the interface editor displays: the Primary Window 90, the Active Interface Window 95, and the Active Component Resources Window 96. The windows are shown on the display 28 in Fig 5. The windows are described as follows:

- o Primary Window 90 - This window contains the interface editor main menu 91, the status line 92, the component creation control panel 93 and the component hierarchy display area 94. The main menu 91 provides access to interface functions, edit functions, clipboard functions, user preferences, viewing options, and help functions. The component creation control panel 93 contains a set of pushbuttons, one for each component type supported by the interface editor (i.e., secondary window, dialog box, menu bar, explicit group, Automatic group, pulldown menu, popup menu, option menu, menu choice etc.). The component hierarchy display area 94 shows an at-a-glance view of the components in the current active interface and the relationships between them. The component hierarchy display area also allows the developer select a component for manipulation. Selection means that a component's resource list is displayed, it becomes the active parent, if applicable, for the subsequent creation requests, and edit operations (cut and copy) will apply to the component.
- o Active Interface Window 95 - This is the WYSIWYG display of the user interface under development and corresponds to the hierarchy of user interface components as shown in component hierarchy display area.
- o Active Component Resources Window 96 - This window displays a list of the resource names and values for the active component. The resources are displayed as a group of radio buttons so that the developer can select one for modification. Selection of a resources prompts the display of a resource editor appropriate to the type (color resource, integer resource, text resource, etc .) of resource selected. Modification of a resource value is immediately reflected by the component in the Active Interface Window 95 and if appropriate in the component hierarchy display area 94 (i.e. , when a label resource is modified).

o The developer can also interact with other windows that are used for error messages, dialog boxes, and resource editors.

The Active Component Resources window 96 is not required and may be removed from the display by the user. The other two main interface editor windows (the Primary Window 90 and the Active Interface Window 95) are always displayed. Other windows in the form of dialog boxes are display ed as the result of specific requests from the user in the three main windows. These dialog boxes are remove d from the display by the interface editor on completion of their particular task. The following paragraphs describe the purpose of and interactions with each of the main windows and dialog boxes of the interface editor's user interface.

The interface editor's primary window 90 is shown in FIG 6. It consists of four pieces: a menu bar 91, a status line 92, a scrolled list of options for component creations 93, and a display of the component hierarchy corresponding to the current user-defined interface in the component hierarchy display area 94. The menu bar 91 contains the following choices: Interfaces, Edit, View, Options and Help. Associated with each choice of the menu bar is a mnemonic which is shown in FIG 6 as the underscored letter of each choice. The mnemonic is a single letter which allows the user to select the specific menu bar choice from the keyboard when the menu bar is active. Also, each of the pulldown menus associated with the menu bar contains mnemonics for each choice in the pulldown menu. These choices may be selected from the keyboard when the pulldown menu is displayed. See FIG 7.

The Primary Window Menu Bar 91 provides for the following choices of types of actions as follows: Interface actions, Edit Actions, View Actions and Options actions. The actions a re discussed below

The Interface Actions appear on a pulldown menu when Interfaces is invoked, the functions available correspond to the standard File actions such as NEW, OPEN, SAVE, SAVE AS, DELETE , PRINT and EXIT. See FIG 24.

o NEW allows the developer to begin creation of a new interface. The developer is prompted for confirmation if modifications to the current interface have not been saved. The new interface, consisting of an empty Primary Window, is untitled and is displayed in the Active Interface Window.

o OPEN allows the developer to choose an existing interface to load from the display object store. The developer may either select an user interface from the list displayed in the scrolled window, or type a name in a 'Selection' entry field. The user interface choices are displayed alphabetically in the scrolled list and are obtained by using either a library area or a search path as a filter. After selecting an interface, the developer clicks on the OK button to actually initiate the open. The open operation can also be initiated by double clicking on one of the user interfaces listed in the open interface dialog. If unsaved modifications are present for the existing interface, the developer is prompt ed for confirmation before loading the new interface. The developer may click on the Cancel button to exit the Open Interface dialog without opening an interface.

o SAVE stores the current interface to the display object store. The default display state of each interface component is saved with the interface. This resource determines whether or not that component is displayed when its parent is displayed at application run time. The state of the interface when it is saved determines the default display state settings; those components that are not displayed when the interface is saved will by default not be displayed when the interface is loaded. For example, suppose the application developer creates push button A, does an Undisplay for push button A and then saves the interface. When the interface is loaded at application run time, push button A will not be displayed automatically when its parent is displayed. NOTE: The application can change the default display state run time, so that push button A is displayed with its parent; such a change affects only the executing copy of the interface, not the display object store copy.

o SAVE AS stores the current interface to the display object store using interface name provided by the developer. The interface names are initialized with the current values when the dialog is displayed; the developer may update them or continue with the current name and library area. If the interface name specified already exists in the display object store, confirmation is request ed before the previous copy is overwritten. The interface is renamed, the Active Interface Window is update d with the new interface name, and subsequent saves apply to that name.

o DELETE allows the developer to delete an interface from the display object st ore. Except for its title, the Delete Interface dialog is identical to the Open Interface dialog. The inter face to be deleted is selected from a list of those available, and the developer clicks on the OK button. T he developer must respond to a confirmation prompt before the interface is actually deleted. The current interface is the default selection;

when the current interface is deleted, the Active Interface Window is initialized with an empty Primary Window.

- o PRINT allows the developer to create a screen dump of the current user interface.
- o EXIT ends the interface editor session. The developer is prompted for confirmation if the current interface has been modified since it was last saved to the display object store.

The Edit Actions allow the developer to manipulate user interface components within the active interface. The interface editor Edit Menu is shown in FIG 7. The component hierarchy display area 94 is used to select those components of the interface on which to perform edit operations. An accelerator can be associated with each Edit action, some accelerators are to the right of each Edit action. The accelerator is a key sequence which the developer may use to invoke the associated action instead of using the mouse to display and traverse the Edit menu to select the desired edit action. The accelerators shown are merely examples. Some editing actions are defined below.

- o UNDO reverses only the most recent cut, paste, move, or resize operation. For example, if the developer cuts a user interface component(s) from the user interface followed by a cut of another user interface component(s), the developer can only undo the most recent cut operation since it was the last one to be performed. The clipboard is unaffected by the undo operation. The Undo menu choice is appended with the most recent of the cut, paste, move, or resize operations so that the developer is aware of the type of operation to be undone. If a cut, paste, move, or resize operation has not been performed for the current interface, the Undo menu choice is unavailable; it has nothing appended, and is grayed out.
- \- UNDO CUT restores the portion of the user interface previously cut.
- \- UNDO PASTE removes the pasted user interface components from their new location.
- \- UNDO MOVE restores the user interface component to its previous x and y location.
- \- UNDO RESIZE restores the user interface component to its previous height and width.

For undo cut, if the parent-child pairing is no longer valid due to user interface components added or deleted since the last cut operation, an error message is issued and the undo operation is not performed.

- o CUT removes the selected user interface components, placing them in the clipboard. The previous contents of the clipboard are overwritten with the newly cut user interface components. Note: The primary window can not be cut (since every interface must contain a primary window). The cut option is made insensitive when the primary window is the active component.
- o COPY duplicates the currently selected user interface component, including it s children, into the clipboard, without removing the original components from their current location. The previous contents of the clipboard are overwritten with the newly copied user interface components. Note: The primary window can not be copied (since every interface contains exactly one primary window). T he copy option will be made insensitive when the primary window is the active component.
- o PASTE copies from the clipboard to the user interface and empties the clipboard. The currently active parent user interface component is used as the parent for the pasted user interface component or group of components. If the parent-child pairing is not valid (due to inconsistent types, for example), an error message is issued and the user interface components are not pasted. If any o f the user interface components being pasted have the same name as another user interface component in the interface, the pasted component's name will be changed to a default name.
- o MOVE allows the developer to interactively move the user interface component within the bounds of its parent. Selection of this option moves the mouse cursor to the upper left ha nd corner of the user interface component. In test mode, moving the mouse also moves the component. In design mode, a rubber band box will appear for a primary window, secondary window, dialog box, or message dialog. The rubber band box will move to show the new position of the user interface component. This allows the developer some flexibility to see the entire active interface during creation without affecting the runtime position values. The developer will have to switch to test mode to see the runtime positions of all the windows in the active interface. For the remaining user interface components, moving the mouse in design mode also moves the user interface component. Clicking any mouse button terminates the move operation and updates location resources (x and y) for the component.
- o RESIZE allows the developer to interactively resize a user interface component within the bounds of its parent. Selection of this option places the mouse cursor in the lower right hand corner of the user interface component. A rubber band box anchored in the top left is then displayed to preview the resize operation. Clicking any mouse button terminates the operation, resizes the user interface component and updates the height and width resources of the user inter face component.
- o SNAP CURRENT COMPONENT TO GRID moves the current user interface component to the grid intersection nearest to its upper left corner.
- o SNAP CHILDREN TO GRID moves each child of the current user interface component to the grid intersection nearest to the upper left corner of the child user interface component. The grid does not have to be displayed.

- o RAISE allows the developer to raise the user interface component to the top o f the displayed user interface component stack. A stack of papers on a desk is a common metaphor used to describe the relationship between window-based user interface components. In order to fully view a user interface component that is partially or fully hidden below another user interface component, it must be raised to the top of the stack. This option raises a user interface component to the top o f a stack comprised of that user interface component and all its siblings.
- o LOWER allows the developer to push the active component below other user interface components with the same parent. When a user interface component is lowered, all other user interface components with the same parent are displayed in front of it in the Active Interface Window.
- o DISPLAY allows the developer to display the active user interface component.
- o UNDISPLAY allows the developer to remove the active component from the display. The user interface component is not destroyed by the undisplay action, just removed from view.

The view Actions determine how the user interface components in the user interface under development are represented in the component hierarchy display area. These options allow the developer to determine the orientation and scale of the user interface component hierarchy tree. Changing the hierarchy orientation and scale will in most cases also impact which user interface components are visible in the component hierarchy display area. The interface editor will adjust the display if necessary, to ensure that the currently selected component is visible following a view action. The interface editor View Menu contains the following functions.

- o ORIENTATION allows the developer to specify the orientation of the hierarchy tree. The possible values are Vertical and Horizontal. Selection of the orientation menu choice will present the developer with a sub-menu containing the two values.
- o FULL SIZE specifies that the labels for the push buttons in the hierarchy tree are displayed in the active interface editor font and the size of the push buttons will be based on that font.
- o 1/2 SCALE specifies that the size of the push buttons in the hierarchy tree i s 1/2 the size they would be if displayed using the active font. The labels of the push buttons in this scale may not be readable.
- o 1/4 SCALE specifies that the size of the push buttons in the hierarchy tree is 1/4 size they would be if displayed using the active font. The labels of the push buttons in this scale may not be readable.
- o 1/8 SCALE specifies that the size of the push buttons in the hierarchy tree i s 1/8 they would be if displayed using the active font. The labels of the push buttons in this scale may not be readable.

The Options actions provide the developer with several interface editor specific functions involving such things as developer preferences and grid functions. These are described below: o ACTIVE COMPONENT RESOURCES DISPLAY displays a pulldown menu which allows the developer to toggle the display of the active component resources window on and off.

- o ACTIVE COMPONENT CREATION BUTTONS displays a dialog box which allows the developer to select which component creation push buttons are displayed in the Component Creation Control Panel. By setting the checklist button off, the corresponding component creation push button will not appear in the Component Creation Control Panel and, thus, the developer will not be able to create a component of that type until that checklist button is again activated. If all of the component s of a category (container, composites, or primitives) are turned off, the label for that category will also not appear in the Component Creation Control Panel.
- o GRID displays a dialog box that allows the developer to activate and specify parameters for a grid in the active component. This grid can be used to position user interface component s in a consistent way inside a parent. The Grid option is available only when the active component is a primary window, secondary window, dialog box, or an explicit group box. A grid can be defined for each component of these types in the active interface. Grid settings are retained independently for each component for the length of the current interface editor session. Each of the fields in the grid dialog box is described below.
- o SNAP TO MODE presents the developer with a pulldown menu which allows the developer to toggle the snap to mode on and off. When snap mode is one, any child (except a secondary window, dialog box or message dialog box child) of a primary window, secondary window, dialog box, or explicit group box which is moved will automatically snap to the nearest grid intersection when the move operation is terminated.
- o PREFERENCES displays a dialog box which allows the developer to modify, apply and save developer preferences for the interface editor. These preferences include foreground a nd background color, font, grid spacing, interface search path, and pixmap search path.

- o DESIGN/TEST allows the developer to toggle between test and design mode for t he developing user interface. Design mode is the default mode for the interface editor. Select ion of the design/test mode menu choice presents the developer with a sub-menu of the two modes. The current mode is displayed in the interface editor status line.

The interface editor Help menu provides the standard features of an interactive help facility.

The interface editor status line 92, located directly below the menu bar, shows the following:

- o the current parent component
- o whether the current user interface is being manipulated in design or test mod e.
- o whether "Snap to mode" is on or off.

The Component Creation Control Panel 93 is described below. User interface component creation is accomplished by use of the component push button list contained within the inter face editor primary window. This scrolled list contains one button for each user interface component type supported by the interface editor. At any given time, only those component types valid as children of the active parent are selectable (sensitive). Selection of a sensitive component button will:

- o create a user interface component of that type which will be a child of the active parent.
- o the new user interface components resources will be assigned default values.
- o place the child in a default location within the parent.
- o activate the user interface component.

The component hierarchy display area 94 is a scrolled window which contains a representation of the current active interface as a set of push button connected by line which represent parent/child relationships between user interface components. The push buttons which represents the primary window of t he interface is always the root of this tree. The buttons which represent the first level children of the primary window are connected to the primary window push button by a line. Each of the child push buttons is aligned so that their X locations are equal in the case of horizontal orientation of the hierarchy and their Y locations are equal for a vertical orientation. This scenario is repeated for each level of the component hierarchy.

The component hierarchy display area is updated each time a component is added or deleted. Each of the following composite components is displayed in the hierarchy as several separate boxes to indicate the building blocks from which is it composed: radio box and checklist box. For example, when the developer creates a radio box, buttons for a group box and 5 radio buttons (the default number in a radio box) will be added to the hierarchy display. This is done in order to provide access to the individual re sources of the building block components.

Component Selection/Activation: This function allows the developer to select (activate) a single user interface component or a sub-hierarchy in the user interface for resource manipulation or edit operations. To select a single user interface component, the developer places the mouse cursor over the push button which represents the desired user interface component and clicks the mouse button. When this is done :

- o the button foreground and background colors are reversed o the component hierarchy display area is re-centered on the selected user interface component button, unless the whole hierarchy or the portions relevant to the selected user interface component button are already displayed.
- o the Active Component Resources window is updated with the resources for the s elected user interface component. Note that the update occurs even if the Active Component Resources window is not currently displayed.
- o and the selected user interface component becomes the active parent, if applicable. If the selected user interface component may validly be the parent of any other user interface component type, the selected user interface component becomes the active parent. If the selected user interface component can not be the parent of any other user interface component types, its parent becomes the active parent.
- o The active parent is the user interface component that serves as the parent for subsequent user interface component creation operations. The sensitivity of the buttons in the component creation control panel is updated to reflect valid children user interface components of the active parent.
- o copy operations affect only the selected user interface component. If the component has children they are not copied.

If the mouse is placed over the parent of a group of components and mouse button is double clicked, the entire sub-hierarchy below that parent is activated. In this case:

- o the colors of all of the buttons in the hierarchy display which represent descendants of the parent are reversed.
- o the resources for the parent component are displayed in the Active Component Resources window.

o modifications to the foreground color, background color, font, and background pixmap resources of the parent are immediately propagated to the descendent user interface components .

o copy operations will apply to the entire sub-hierarchy of user interface components.

The Interface Editor Active Interface Window - Design Mode. The Active Interface Window 95 shows the user interface components of the user interface under development for which the display state is set to true. FIG 8 shows the WYSIWYG representation of the actual components represented in the component hierarchy display area of FIG 6. This display is updated dynamically as user interface components are added, deleted, or modified. Test and design mode determine the reaction to input in this window. When in design mode, pressing the mouse button 1 with the pointer over a visible user interface component in the active interface window will activate the user interface component. Pressing mouse button 2 will display a po pup menu with the edit options available for the active component. The edit options available in the popup men u are the same options available on the edit menu in the interface editor Primary Window. Also in design mode, when the window manager is used to move a primary window, secondary window, dialog box, or message dialog, the user interface component will physically move on the screen but the component's x and y resources will not be updated. This allows the developer greater ease in viewing all of the active interface's windows during creation without affecting the runtime position attributes. When these component's x and y resources ar changed via a move operation or the resource editor, the component will not physically move. Instead, a rubber band box will be displayed showing the new position of the component. Once the move operation is terminated or the resource editor is removed, the rubber band box will disappear but the component's x and y resources will be internally updated. In either case, the developer will have to switch to test mode to view the runtime position of all the active interface components.

Interface Editor Active Interface Window - Test Mode. When in test mode, the default behavior appropriate to the user interface component takes place for all mouse and keyboard events. For example, if a choice in a Menu Bar has a pulldown associated with it, pressing mouse button 1 with the mouse po inter in the choice displays the pulldown. Also, when using the window manager to move a primary window, secondary window, dialog box, or message dialog, the user interface component's x and y resources will be updated . And, when changing the x and y resources via the move operation or resource editor, the actual user inter face component will move to show it new position.

The Active Component Resources in window FIG 9 allows the developer to view and select for modification the resources of the active component. It contains a label which identifies the current component and its type, along with a list of labels which contain the names and current values for the resources of the current component. By placing the mouse pointer over the desired resource and pressing mouse button 1, the interface editor will activate an editor for each unique component resource type. For example, there is a single color resource update tool which is used to change any component color resource such a s foreground color, background color, etc. See FIG 11.

If the size of Active Component Resources window is increased, the dialog will adapt to display more of the component's resources. The opposite is also true if the dialog's size is decreased. Resource changes made via the resource editors described below are propagated to all descendants of the active component when all the following conditions are true:

o the resource being changed is a color, font or background pixmap.

o the user interface component for which the resource is changed is a parent of other components.

o the user interface component and the sub-hierarchy below it (as opposed to just the parent component itself) are currently selected (see Component Selection/Activation above for a discussion of how components and sub-hierarchies are selected).

For example, if a group box and its descendants are selected in the user interface component hierarchy display area, a change to the font of the group box will cause the same font resource value to be propagated to each descendent of that group box.

The following describes an example of using a resource editor dialog box. FIG 10 shows the text resource box editing the title resource associated with the primary window. The text resource editor dialog is used to modify a component resource consisting of one or more lines of text that are to be treated as a single unit (as opposed to a list). The Text Resource Editor is used to modify component names, button label s, etc. The current value of the component resource being modified is made available for editing in this dialog. In addition, the editor shows the specific name of the resource being edited (e.g., "Title").

Once the developer has completed all desired changes, selection of the OK button will update the current component to reflect the change and remove the text resource editing dialog from the display. If a single line resource is being edited, pressing the enter key will also update the resource value and remove the dialog. Selection of the Cancel button will also remove the editing dialog from the display but leave the value of the selected component resource unchanged. If the resource to be edited consists of more than one line, a scrolled window containing multiple lines is presented; otherwise a single line text entry field is shown. Note: Only the first line of a text resource is displayed in Active Component Resources window, with the number of characters shown limited by the width of the Active Component Resources window. Another example of a resource editor is shown in FIG 11. The color resource editor dialog is used to modify component color resources. Color resources include foreground and background col or, shadow colors etc. This dialog displays a grid of radio buttons, one for each available named color, in the color that corresponds to the named color. The resource's current color name is displayed and the matching radio button is set to indicate that color as the current color. The developer changes the resource color by selecting the desired color's radio button. The user interface component is updated as the developer selects each radio butt on. Selection of the default radio button will set the resource value to "Default". This, in turn, will retrieve the user preference value to set the color resource. If the developer selects the OK button or presses the enter key, the dialog is removed from the display and any changes made to the resource remain. Selection of the cancel but ton will remove the dialog from the display and the resource will be restored to the color the resource had when it was selected for modification.

Other resource editors are available to modify other types of resources.

THE USER INTERFACE SERVER (UIS)

As shown in FIG 1a the user interface server 48 provides the applications with the ability to load user interfaces which have been previously created and stored in the display object store 46 by the interface editor 49. The user interface server 48 provides a run-time interface between the window management system 58 and the applications. The user interface server 48 is capable of handling multiple applications each with multiple user interfaces.

The user interface server also provides applications with the ability to load a portion of an interface and attach it to a previously loaded interface. Each application 50, 53, 54 can modify interfaces which have been previously loaded by the user interface server 48 from the display object store 46 and can control the behavior of the interface. Although different applications 50, 53, 54 can share the same user interface as stored in the display object store 46, they may each separately tailor the interface after it is loaded by the user interface server 48. The user interface server 48 loads separate copies of each shared interface into the working memory area 78 for each application currently using the shared interface. Since applications may have several user interfaces it is possible that multiple copies of a user interface will be loaded for a single application. Each would be separately modifiable by the application.

As shown in FIG 1a, the applications 50, 53, 54 are coupled to the user interface server 48 via interconnecting means 56. Each application issues commands to the user interface server via the user interface server interface 52. The user interface server interface 52 is part of the application. The user interface server interface 52 provides a set of commands that permits each application to individually control the behavior of their user interfaces and receive information from the user interface server 48. The user interface server interface 52 provides each application with the functions necessary to control and modify its user interfaces. Each application can issue any of the set of commands to be carried out by the user interface server 48. This provides an application development language by which each application has the ability to control the behavior of its user interfaces.

The user interface server 48 services the commands issued by each application. These commands can include: initialization; loading of user interfaces; attaching portions of user interface s to previously loaded user interfaces; deleting loaded user interfaces or portions of loaded user interfaces; modification of loaded interfaces; querying; initializing default values; and the displaying and undisplaying of user interfaces and user interface components. It is the application's use of these commands that provide for dynamic use of user interfaces and window management system independence.

Additionally, the user interface server interface 52 also provides a mechanism for each application to receive appropriate information about user actions. Suppose application A currently has displayed a user interface that contains a list of menu items. If a user selects a menu item shown on the display means with a mouse, the appropriate function in Application A for handling this selection would be invoked in response to the user selection. The name of the application function to invoke is provided by means of a callback resource associated with the particular menu item.

Interconnecting means 56 also provides the capability for an application to be located on a remote system with its user interface presented on the platform containing the user interface serve r 48. The remote application communicates to the user interface server 48 via its remote user interface server interface to the remote communication adaptor (not shown) which communicates to the local communications adaptor 36 which communicates to interconnecting means to the user interface server 48. This remote connection provides for two-way communication. Thus applications do not have to be located in the same system as the user interface server. This flexibility is due to the server nature of the user interface server.

The window management system 58 permits the user interface server 48 to show results in different areas of the display, to resize the screen areas in which those user interfaces of particular applications are executing, to pop-up and to pull-down menus. The window management system is a resource manager in much the same way that an operating system is a resource manager, only the types of resources differ. The user interface server 48 utilizes the window management system's 58 capability to manage display resource s. The user interface server 48 interacts with the window management system 58 as an agent for the applications 50, 53, 54.

Although the user interface server 48 would have to be modified to work with a different window management system, the applications themselves would not. Each application's user interface s are controlled and managed via commands issued through the user interface server interface 52. These functions implemented by these commands are supported by the user interface server on any window management system to which the user interface server has been ported. Thus the user interface associated with each application is independent of the window management system.

An important advantage of this invention is that the application can dynamically specify sharing. Most applications have user interfaces that consist of sub-hierarchies of user interface components. Often a sub-hierarchy is only needed on demand, as the result of a user selection within the user interface. For example, assume a user interface contains a menu with a list of several choices, one of which when selected causes a print function to be invoked. The corresponding application may be set up so that if t he user selects the print function the application will command the user interface server to load the print sub-hierarchy from the display object store and attach it to the appropriate location of the already loaded user inter face containing the menu list and then display the print sub-hierarchy. If the user then makes a selection that ca uses the print function to no longer be needed (i.e, exit print function) the application can issue a command to the user interface server to delete the sub-hierarchy from the working memory area or to modify the working memory area so that the sub-hierarchy is no longer displayed.

THE APPLICATIONS

Applications issue commands to the user interface server and receive event information from the UIS. Each application can be run in either a compiled or an interpretive environment. Compilation is a process that translates a computer program, a set of abstract instructions, into a series of machine instructions that can be executed by the computer. Software development environments that require an application to be compiled before it can be run are referred to as compiled environments. In contrast, some environments allow the developer to run an abstract series of instructions directly, providing an interpreter to translate the abstract instructions into machine language as the program is being executed. Such environments are referred to as interpretive.

Applications may have one or more user interfaces in which they communicate to the developer. An application with several user interfaces can load all its user interfaces when the application is initially invoked or it may load the interfaces as required by the user's selections. Each application controls the display and appearance of their user interfaces by issuing commands to the UIS. The set of commands available to the application is referred as the UIS Interface. The UIS Interface contains the cod e for invoking the UIS to carry out the commands. The sequence by which the UIS interface commands are issued by the application and the specification data associated with each command determine how the user interfaces will appear on the screen and determine which application functions will respond to user generated events.

From the application developers point of view, the user interface server 48 provides a front-end to the windowing system; it loads the user interface at runtime, controls the display o f the user interface (sending commands to the windowing system which actually renders the user interface on the display), and provides the mechanism for interaction between the user interface and the application function.

THE DISPLAY OBJECT STORE (DOS)

The user interfaces are stored externally from the UIS, window management system, and the applications. FIG 3 depicts the display object store containing several user interfaces. The user interfaces may be stored in a file or a database. The UIS can retrieve user interfaces from the display object store or have the display object store retrieve a specified user interface or a list of user interface names. A user interface in the display object store contains general information about the user interface, information about the individual components, and defines the relationship amongst the components within the user interface.

The user interfaces are stored externally from the applications and the UIS in the DOS. It is the external nature of the display object store that facilitates sharing and dynamic use of the user interfaces. The user interfaces can be stored as flat files or in a database. A flat format is a sequential or one-dimensional representation of the two-dimensional user interface hierarchy.

User interface hierarchies are easily represented in computer memory. For instance, using structures containing pointers to point from parent components to child components. However, files an d some database structures do not lend themselves to such direct representation, thus the hierarchy has to be serialized into a one-dimensional representation referred to here as a flat file. Sufficient information is store d in the flat file to recreate the hierarchy later. This information is often recorded by including the name of the parent of each component with the component.

As stated previously the UIS utilizes a hierarchical organization of components in the working memory area. It is this logical hierarchical organization of the user interface components that is important. One of the advantages of representing the user interface as a hierarchy of components is inheritance. Components in the hierarchy can inherit attributes and behavior from parent components. For example, an application may have a user interface with a primary window and several secondary windows as children, with a dialog box being a child of one of the secondary windows. Under inheritance the dialog box cannot be displayed unless the parent secondary window is displayed and the secondary window cannot be displayed unless the primary win dow is displayed. A person of ordinary skill in the art is capable of determining the appropriate conversion from the external DOS format to the UIS internal hierarchical format. It is important to note that this invention is not limited to any particular formats for user interfaces whether in the display object store or in the working memory area. The exact format for storing the user interfaces is not significant as long as the UIS can access the user interfaces as a hierarchy in memory. Of primary importance in selecting a storage format is the ability to move the display object store from system to system with the applications.

Although the display object store 46 is shown in FIG 2 as located in RAM 38, the display object store 46 may be stored on disk, flash memory and/or ROM without loss of functionality. The display object store 46 may also be located on an entirely different data processing system with access to the display object store provided by the communications adaptor 36, I/O 30 or the system bus 22. In fact the display object store 46 may be located on a file server so that numerous applications operating on different systems could utilize the user interfaces as stored in the display object store on the file server.

THE WINDOW MANAGEMENT SYSTEM (WMS)

A window management system provides many of the important features of modern user computer interfaces. A window management system allows multiple applications to interact with the use r on a single computer display, and provides low level functions for the application to display data an d collect input from the user. The window management system permits applications to show results in different areas of the display, to resize the screen areas in which those applications are executing, to pop-up and to pull-down menus. The window management system is a resource manager in much the same way that an operating system is a resource manager, only the types of resources differ. The window management system allocates the resources of screen area to various applications that seek to use the screen and then assists in managing these screen areas so that the applications do not interfere with one another. The window management system al so allocates the resources of interaction devices to applications that require user input and then routes the flow of input information from the devices to the event queue of the appropriate application for which the input is destined.

A window management system typically has two important parts, the first is the window manager with which the end user interacts to have windows created, resized, moved, opened, closed a nd so on. The second is the underlying functional component, the window system, which actually causes windows to be created, resized, moved, opened, closed and so on. The window manager can be built on top of the window system. The window manager uses services provided by the window system. The window manager window system as a command line interpreter is to the underlying operating system kernel. Applications are built on top of the window management system. The applications built on the win dow management system are sometimes called clients, which in turn use the capabilities of the window management system, itself, sometimes called the server program. In some client/server window management systems, such as the X Window system, the window manager itself appears to the window system as just another client program. In other systems there is a closer relationship between the window manager and the window system than there is between a client and server. Note that multiple clients are supported by a single server, versus link ed code which requires a one to one relationship. The client/server model permits clients and servers to execute on different platforms, communicating via interprocess communications or other interconnecting means. The use of interprocess communications allows computation intensive applications to reside on a powerful computer while the user interacts with the application from a workstation. In this regard, the client/server model is just a sophisticated instance of a virtual terminal protocol; such protocols, in general, share this advantage.

A window management system does not need to be built on the client/server model . For instance, the MacIntosh has no well defined separation between the window manager and the win dow system. Such separation was not necessary for the single active process, single processor design of the MacIntosh], and would have led to additional runtime overhead. Of course, in window management systems that provide for the use of interprocess communications between the window manager and the window systems, such as X Windows, News and Andrew, the interface must be designed to minimize communication delays .

Applications sharing a common window system can utilize a common interactive technique toolkit built for the WMS to assure a common look and feel. An interactive technique toolkit consists of a set of subroutines that provide different types of display objects.
Interactive technique toolkits, which are subroutine libraries of interaction techniques, are mechanisms for making a collection of techniques available for use by applications. By using interactive technique toolkits, a consistent look and feel among applications sharing a common WMS can be insured. For instance, the menu style used to select window operations should be the same style used within all applications. Basic elements of the toolkit can include menus, dialog boxes, scroll bars, file selection boxes a nd the like, all which can conveniently be implemented in windows. Interactive technique toolkits are avail able for specific WMSs. Widely used toolkits include the Andrew Window Management Systems Toolkit, the MacIntosh] Toolkit, OSF/Motif and InterViews toolkits for use with the X Windows system. Also XRAY a nd CLUE. Several toolkits implement Open/Look on both X Windows and News, Presentation Manager and the Sun View Window Management Systems Toolkit.

HOW THE INVENTION IS USED - EXAMPLE OF OPERATION

This section presents an overview how a developer would use the interface editor's to create a user interface.
FIG 12 depicts the primary window as the "Menu bar" component type on the component creation control panel is selected by the developer. The developer, in this example, clicked on the "Menu_bar" option to select the "Menu_Bar" component type. Notice that since a new user interface is being created that only "PrimaryWindow" component is shown in the component hierarchy display area 94 and that it is highlighted indicating that it is the active component and the status line indicates that it is the active parent.

By selecting the "Menu bar" option the developer has indicated a desire to add a menu bar to the current interface. FIG 13 shows the hierarchy display area has been updated to reflect t hat the Menu Bar has just been added. Notice that the Menu_Bar1, the menu bar just added has been designated the active parent. This is not required and the active parent could remain the primary window with other components being added to it as children. The developer next clicks on "menu choice" on the component creation control panel to add a choice to the menu bar.

FIG 14 shows the component hierarchy display area has been updated to reflect that the Menu Choice has been added. Since the developer has not specified names for the user interface components they are shown with the default names assigned by the interface editor.

FIG 15 shows the WYSIWYG representation of the current user interface with the primary window, the menu bar and with a single menu choice components in the active interface window. The user interface components of the current user interface are shown as they will actually appear when interface is run from an application using the user interface server. The choice's label ( "Menu Choice") was selected by default as was the title ("Active Interface").

To change the menu choice label to something meaningful to the developer's application, the developer selects the label resource of the MenuChoice1 component from the Active Component Resources window. The developer is then presented with a dialog box for editing the label, and changes the label to 'File' as shown in FIG 16. The active interface window is automatically updated to reflect the new label as shown in FIG 17. Similarly the developer changes the component name from MenuChoice1 to file by s electing and editing the name resource. The component hierarchy display area is automatically updated to reflect the name resource change.

In a similar fashion the user adds menu choices of 'Edit', 'View' and 'Options' resulting in a WYSIWYG interface depicted in FIG 18. The component hierarchy display area corresponding to this display is shown in FIG 19. Note that the component hierarchy display area was updated automatically to reflect the additions and the name resource modification of the new choices. The entire interface editor with the three windows is shown in FIG 20.

The developer now wishes to define a pulldown which is to be associated with the 'File' option on the main menu. To do so the developer clicks on the box labeled 'File' in the component hierarchy display area, selecting it as the active component. The interface editor responds by highlighting the box representing the "File' menu choice. This action makes the 'File' menu choice the current parent, allowing the developer to add a pulldown and have it associated with the 'File' choice. The pulldown menu is added by clicking on the "Pulldown Menu" component type displayed on the component creation control panel. The developer now adds pulldown menu choices to the pulldown menu. The developer edits the name and label resources for these pulldown menu choices by selecting the menu choice in the hierarchy display area by clicking a mouse over the desired component and then selecting the appropriate resource in the Active Component Resources window and editing the resource. Changes are reflected in the component hierarchy display area and in the Active Interface Window. The interface editor's primary window is shown in FIG 21 where the developer has added the pulldown menu and the pulldown menu choices 'New', 'Open', 'SaveAs', 'Print' and 'Quit'. Note that in FIG 21 the developer has already clicked on the box labeled "PrimaryWindow" in the component hierarch y display area, selecting it as the active component. The interface editor responded to this selection by highlighting the box representing the 'PrimaryWindow' menu choice. This action makes the 'PrimaryWindow' menu choice the current parent.

Thus far the user has been in the interface editor design mode. FIG 22 shows t he Interface editor's primary window where the developer had selected the 'Options' menu choice from the menu bar and has selected the test mode via the options pulldown menu. In test mode the default mechanisms associated with mouse actions apply.
This means that when the developer clicks on the 'File' menu choice in the Active Interface Window, the associated pulldown is displayed. In design mode, clicking on the 'File' in the Active Interface Window menu choice would not cause the associated interface component to appear. The active interface area is shown in FIG 23 after the developer has clicked on the 'File' menu choice.

To save the user interface the developer could select the 'Interface' option from the interface editor's primary menu bar and click on the 'Save' choice. See FIG 24. The user interface is then saved in the display object store. The developer may be prompted to name the user interface. The user interface created in the above example can be loaded back into the interface editor for further editing, or can be used simultaneously by one or more applications on one or more windowing systems.

To exit the interface editor the developer selects the 'Interface' option from the interface editor's primary menu bar and click on the 'Exit' choice. See FIG 24. The developer could then later reinvoke the interface editor at a later time as described above and retrieve the previously created user interface and edit or modify the user interface. In editing the retrieved user interface the developer can use any of the commands described above. The edited or modified user interface could then be saved in the display object store as a new user interface or it could replace the previously created user interface.

## ADVANTAGES OF THE INVENTION

The present invention solves the identified drawbacks of the prior art. It provides the application developer with a means of creating and editing user interfaces that are independent of any particular window management system. The user interfaces created and edited can be used without compilation. Furthermore, a single representation of the user interface is used for all window management systems. This allows for ease in maintenance and version control of the user interface. When changes are require d to the user interface, the changes can be made by modifying the user interface as stored in the display object store. Changes made do not require recompilation.

The user interfaces created and edited by the interface editor can also be us ed by interpretative applications without requiring special application code to link the interpretive application to the user interfaces. This frees the application developer of the need to provide a programmatic interface between the application and the interpretive environment.

This invention relieves the application developer of the need to write in a com piled language, or to know the details of any particular windowing system or interaction toolkit. In addition, the user interface portion of the application can run without modification on any window management system to which the user interface server has been ported. By eliminating the need for compiling the user interface, several disadvantages are avoided. Compilation of the user interface typically creates a large executable that link s in the windowing system libraries. The large executable takes a long time to load at runtime and requires a large allocation of memory. This adds to the execution time of the application.

This invention does not require compilation of the user interface, nor does it require duplicate representations of the same user interface for different window management systems. One alternative approach to window management system independence, requires a high level language representation plus one compiled executable for each windowing environment. This invention does not require compilation and one representation provides for a user interface on any window management system to which the user interface server has been ported.

ALTERNATIVES AND CLOSING

The present invention could be implemented in many ways. The present invention provides for a user interface builder that provides a higher level of abstraction than the underlying windowing system such that a) the user interface is build interactively and b) the user interface is independent of the windowing system and 2) a runtime environment that loads interfaces and supports the interaction between the user and the application such that a) a mechanism is provided for the application to dynamically modify and query the user interface and b) different applications can share the same user interface. The present invention is not de pendent on the implementation language, hardware or software platform, window management system, user interface toolkit, or the specifics of the look and feel or the exact functions provided.

The present invention provides an interface editor for creation and editing of user interfaces and for storing and retrieving user interfaces from a display object store. A user interface server provides applications with the ability to dynamically load user interfaces and portions of user interfaces from a display object store. The present invention can be implemented on a variety of hardware, software, and Window Management Systems. For example, it could be implemented on a personal computer running Windows] or Presentation Manager with OS/2 or on a Sun or HP workstation running X windows for Unix, or on an IBM RISC System/6000 workstation running AIX and AIX-Windows.

While the present invention has been described with reference to structures disclosed herein, it is not confined to the details set forth and this disclosure is intended to cover such modifications or changes as may come within the purposes of the improvements or the scope of the following claims.

**Claims**

**1.** In a data processing system which includes a computing means, a memory means, a display means, input means interconnected by a system bus, comprising,
a display object store in the memory means which contains a plurality of user interfaces, wherein each user interface contains a plurality of hierarchically related user interface components;
a interactive editor means in the memory means coupled to the display object store, said interactive editor having a primary window containing a main menu, a status line, a user interface component creation control panel and a user interface component hierarchy display area, displayed in a firs t portion of the display means,
the interactive editor means responsive to a initial developer selection of a user interface, retrieves the user interface from the display object store and loads the user interface into a working memory area, displays a hierarchical representation of the components of the retrieved user interface in the user interface component hierarchy display area, displays a WYSIWYG representation of the user interface in a second portion of the display means,
the interactive editor means responsive to one or more editing commands input by the developer using the input means, so that for each said editing command the user interface in the working memory area is modified,
said editing command causing updating of the user interface component hierarchy display area and the WYSIWYG representation of the user interface in the second portion of the display means to reflect the modifications; and
storing said modified user interface in the display object store when the developer is finished editing.

**2.** The system in claim 1 wherein the interactive editor means is coupled to a win dow management system such that the window management system controls displaying on the display means.

**3.** The system in claim 1 wherein the interactive display means also displays a list of resource names and associated resource values for a component selected by the developer in a third portion of the display means, and were the editing commands permit modification of the resource values selected from the list.

**4.** A system for the interactive editing of a user interface, comprising:
a) a computer having a display and stored tasks wherein the appearance of said user interface and method for manipulation are defined by a hierarchy of user interface components each component having associated resources,
b) an interactive display editor for defining the hierarchy of user interface components and their associated resource values,
c) the interactive display editor storing the defined user interface consisting of the hierarchy of user interface components and their associated resources values in a display object store, and
d) user interface server using said user interface as stored in the display object store to render said user interface upon the display and enable user interaction with said user interface .

**5.** An interactive method of editing a window system independent user interface in a computer system which includes a computing means, a memory means, a display means, input means interconnected by a system bus, the user interface being represented by a plurality of hierarchically related user interface components, each component having a plurality of resources the method comprising the steps of:
retrieving a first user interface from a display object store in the memory means;
displaying in a first window one or more editor commands;
displaying in a second window a hierarchical representation of the user interface components of the first user interface;
displaying in a third window a WYSIWYG representation of the user interface;
editing the user interface in response to editing commands selected by a developer in the first window;
storing the edited user interface in the display object store.

**6.** An interactive method of creating a window system independent user interface in a computer system which includes a computing means, a memory means, a display means, input means interconnected by a system bus, the user interface being represented by a plurality of hierarchically related user interface components, each component having a one or more resources, the method comprising the steps of:
a) displaying in a first portion of the display means, a primary window containing a main menu, a status line, a user interface component creation control panel and a user interface component hierarchy display area;
b) creating a active user interface hierarchy in the memory means having a root user interface component and displaying said root user interface component as a symbol in the user inter face component hierarchy display area, where the root user interface component is designated a active component;
c) displaying a WYSIWYG representation of the active user interface hierarchy in a second portion of the display means;
d) adding a user interface component to the active user interface hierarchy, as a child of the active component, when a developer selects a user interface component type from the user interface component creation control panel;
e) updating the user interface component hierarchy display area to display the added user interface component as a symbol with a interconnection symbol to the active component;
f) updating the WYSIWYG representation of the active user interface hierarchy in the second portion of the display means;
g) repeating steps d) through f) until the developer has added all components of the user interface;
h) storing the user interface represented by the active user interface hierarchy in a display object store.

**7.** The method of claim 6 where in step e) the added user interface component is designated the active component.

**8.** The method of claim 6 wherein the developer designates the active component before selecting the user interface component type, where the designation is accomplished by the developer selecting the symbol in the user interface component hierarchy display area associated with the active component to be designated.

**9.** The method of claim 6 wherein a component resource list having a resource name and an associated resource value is displayed for the active component in a third portion of the display means said resource list:
permitting the developer to select resources and modify the value of the selected resource for the active component in the memory means, and in response to such modification updating the user interface component hierarchy display area and the WYSIWYG representation of the active user interface hierarchy on the display means to reflect the modified resource value.

**10.** The method of claim 9 wherein in response to the developer selecting a resource a resource editor associated with the resource is invoked to allow the developer to interactively modify the resource value.

**11.** An interactive method of creating a window system independent user interface in a computer system which includes a computing means, a memory means, a display means, input means interconnected by a system bus, the user interface being represented by a plurality of hierarchically related user interface components, each user interface component having a one or more associated resources, the method comprising the steps of:

a) displaying in a first portion of the display means, a primary window containing a main menu, a status line, a user interface component creation control panel and a user interface component hierarchy display area;

b) creating a active user interface hierarchy in the memory means having a root user interface component and displaying said root user interface component as a symbol in the user inter face component hierarchy display area, where the root user interface component is designated a active component, displaying a WYSIWYG representation of the active user interface hierarchy in a second portion of the display means displaying a list of resource names and associated resource values for the root component in a third portion of the display means;

c) adding a user interface component to the active user interface hierarchy, as a child of the active component, when a developer selects a user interface component type from the user interface component creation control panel, updating the user interface component hierarchy display area to display the added user interface component as a symbol with a interconnection symbol to the active component, and updating the WYSIWYG representation of the active user interface hierarchy in the second portion of the display means to reflect the added user interface component;

d) designating the added user interface component the active component and displaying the list of resource names and associated resources values for the active component in the third portion of the display means;

e) permitting the developer to change a resource value in memory associated with the active component by a resource editing means; said resource editing means causing the updating of the WYSIWYG representation of the active user interface hierarchy, the active component in the user interface component hierarchy display area, the associated resource value in the third portion of the display means to reflect the changed resource value;

f) repeating steps c) through e) until the user interface is completed;

g) storing the user interface represented by the active user interface hierarchy in a display object store.

**12.** An interactive method of editing a window system independent user interface in a computer system which includes a computing means, a memory means, a display means, input means interconnected by a system bus, the user interface being represented by a plurality of hierarchically related user interface components, each user interface component having a one or more associated resources, the method comprising the steps of:

a) displaying in a first portion of the display means, a primary window containing a main menu, a status line, a user interface component creation control panel and a user interface component hierarchy display area;

b) retrieving a user interface from a display object store, in response to a developer selection in the primary window;

c) creating a active user interface hierarchy in the memory means from the retrieved user interface, displaying a hierarchical representation the components of the active hierarchy in the user interface component hierarchy display area, displaying a WYSIWYG representation of the active user interface hierarchy in a second portion of the display means, displaying a list of resource names and associated resource values for the root component in a third portion of the display means;
d) editing the active user interface hierarchy in the memory means in response to developer selections, updating the user interface component hierarchy display area, the WYSIWYG representation of the active user interface hierarchy in the second portion of the display means, and the list of resource names and associated resource values in the third portion of the display means, to reflect the editing;
e) storing the user interface represented by the active user interface hierarchy in a display object store after the developer has completed editing the active hierarchy.

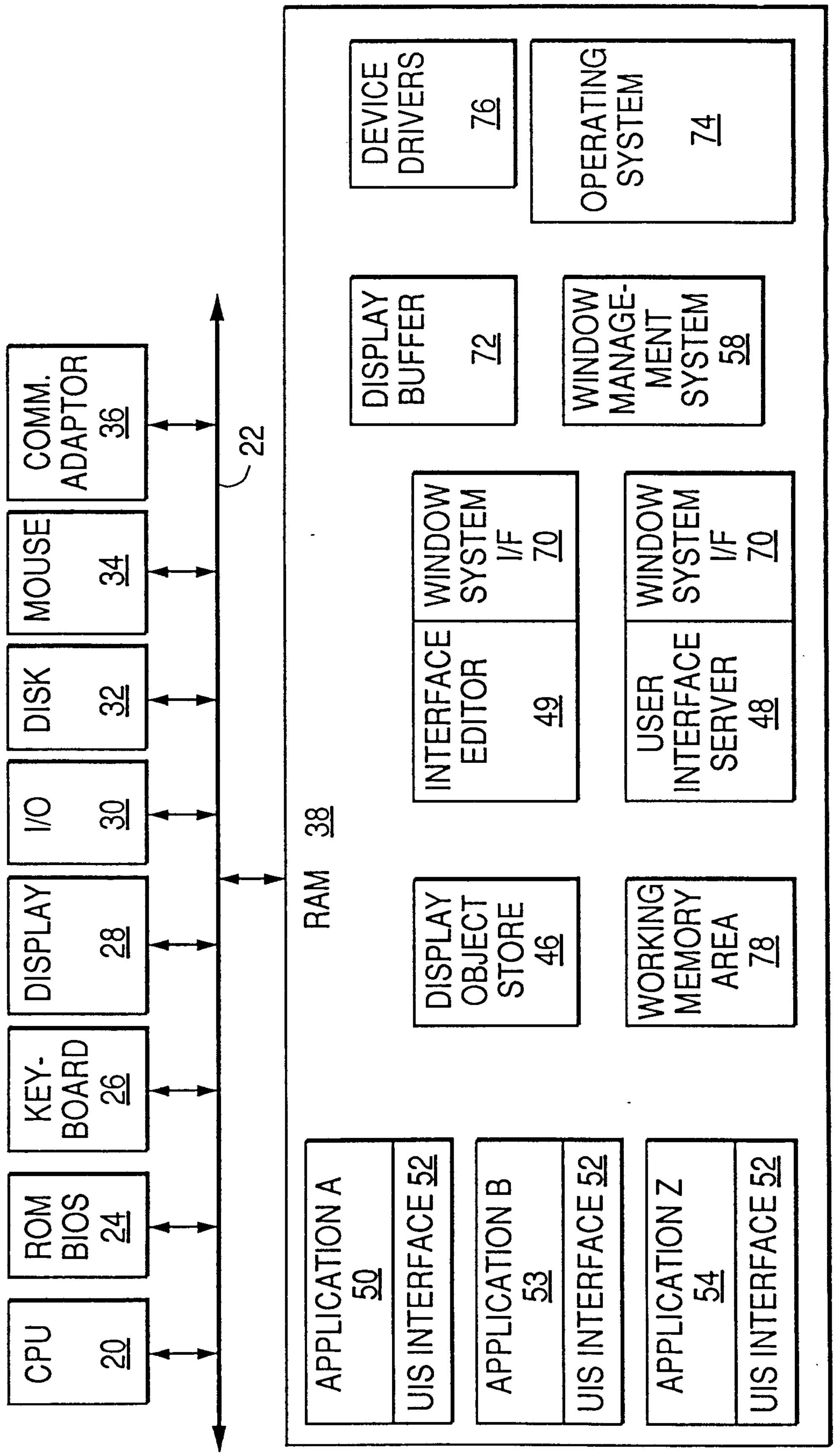
CPU 20
ROM BIOS 24
KEY-BOARD 26
DISPLAY 28
I/O 30
DISK 32
MOUSE 34
COMM. ADAPTOR 36
22
RAM 38
APPLICATION A 50
UIS INTERFACE 52
APPLICATION B 53
UIS INTERFACE 52
APPLICATION Z 54
UIS INTERFACE 52
DISPLAY OBJECT STORE 46
WORKING MEMORY AREA 78
INTERFACE EDITOR 49
WINDOW SYSTEM I/F 70
USER INTERFACE SERVER 48
WINDOW SYSTEM I/F 70
DISPLAY BUFFER 72
WINDOW MANAGE-MENT SYSTEM 58
DEVICE DRIVERS 76
OPERATING SYSTEM 74

FIG. 1a

FIG. 1b

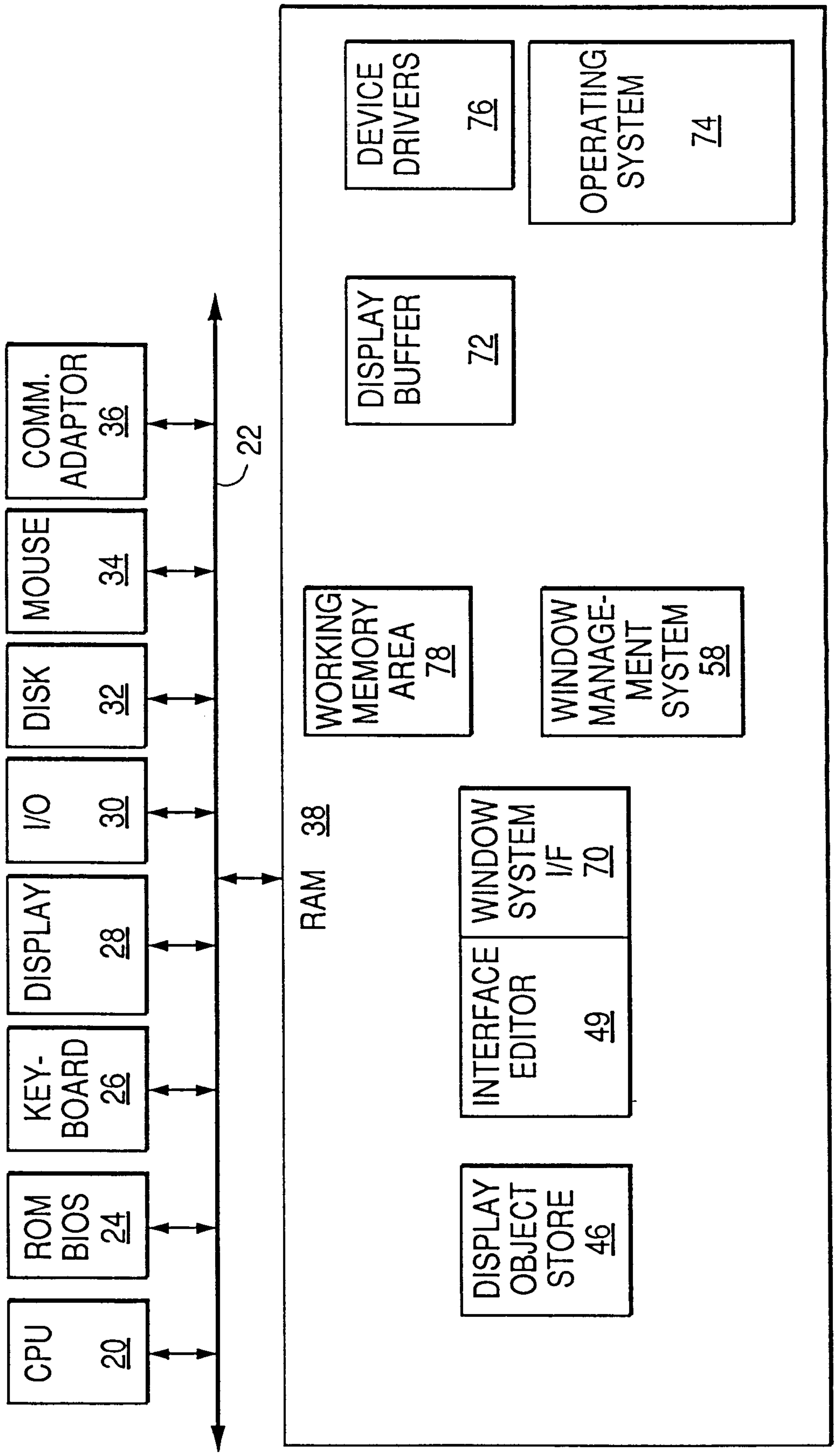
CPU 20
ROM BIOS 24
KEY-BOARD 26
DISPLAY 28
I/O 30
DISK 32
MOUSE 34
COMM. ADAPTOR 36
22
RAM 38
DISPLAY OBJECT STORE 46
INTERFACE EDITOR 49
WINDOW SYSTEM I/F 70
WORKING MEMORY AREA 78
WINDOW MANAGE-MENT SYSTEM 58
DISPLAY BUFFER 72
DEVICE DRIVERS 76
OPERATING SYSTEM 74

FIG. 1c

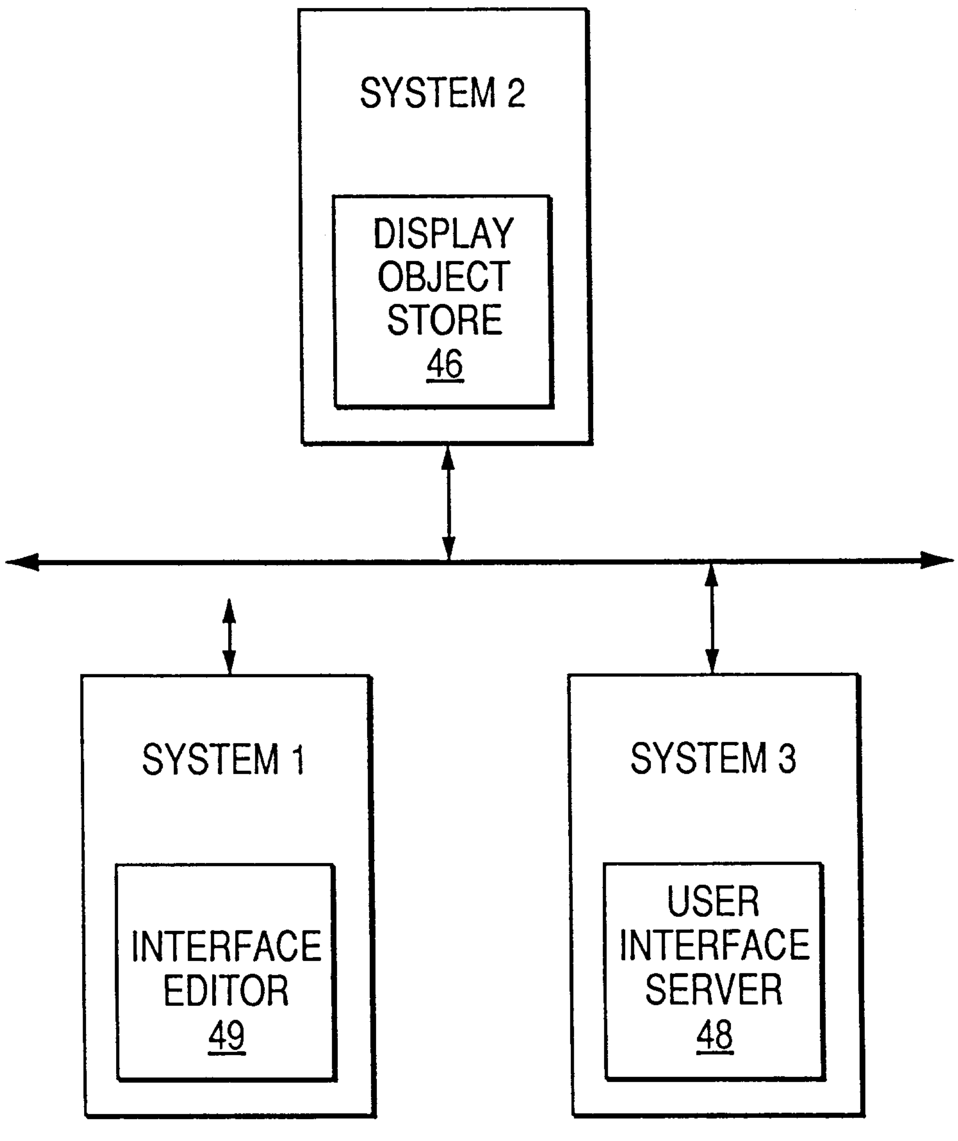
SYSTEM 2
DISPLAY OBJECT STORE 46
SYSTEM 1
INTERFACE EDITOR 49
SYSTEM 3
USER INTERFACE SERVER 48

FIG. 2a

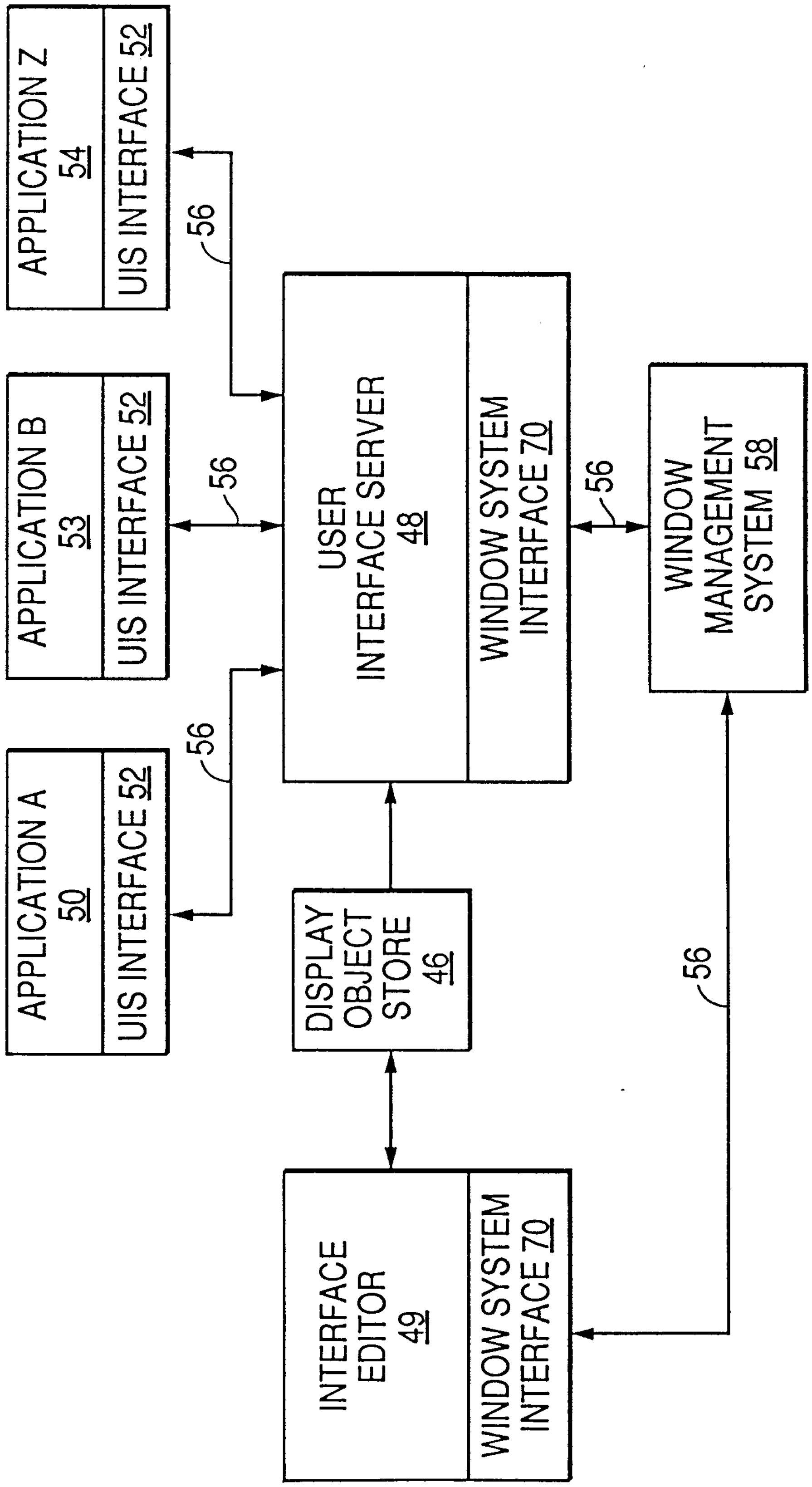
APPLICATION A
50
UIS INTERFACE 52
APPLICATION B
53
UIS INTERFACE 52
APPLICATION Z
54
UIS INTERFACE 52
56
56
56
USER
INTERFACE SERVER
48
WINDOW SYSTEM
INTERFACE 70
56
WINDOW
MANAGEMENT
SYSTEM 58
DISPLAY
OBJECT
STORE
46
56
INTERFACE
EDITOR
49
WINDOW SYSTEM
INTERFACE 70

FIG. 2b

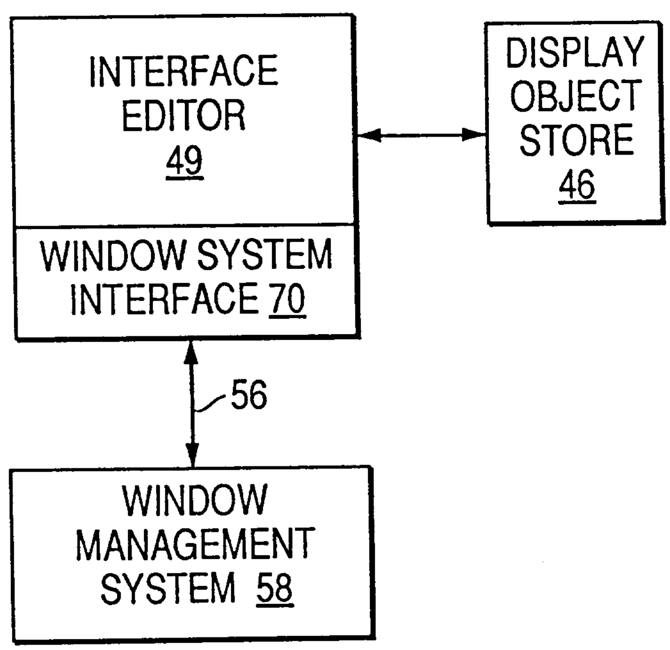
INTERFACE
EDITOR
49
WINDOW SYSTEM
INTERFACE 70
DISPLAY
OBJECT
STORE
46
56
WINDOW
MANAGEMENT
SYSTEM 58

FIG. 2c

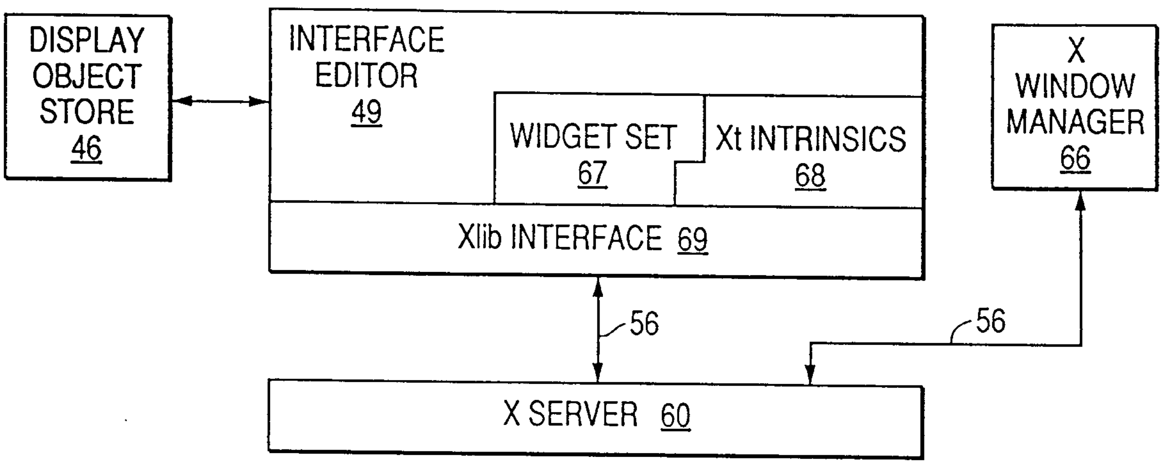
DISPLAY
OBJECT
STORE
46
INTERFACE
EDITOR
49
WIDGET SET
67
Xt INTRINSICS
68
Xlib INTERFACE 69
X
WINDOW
MANAGER
66
56
56
X SERVER 60

FIG. 3

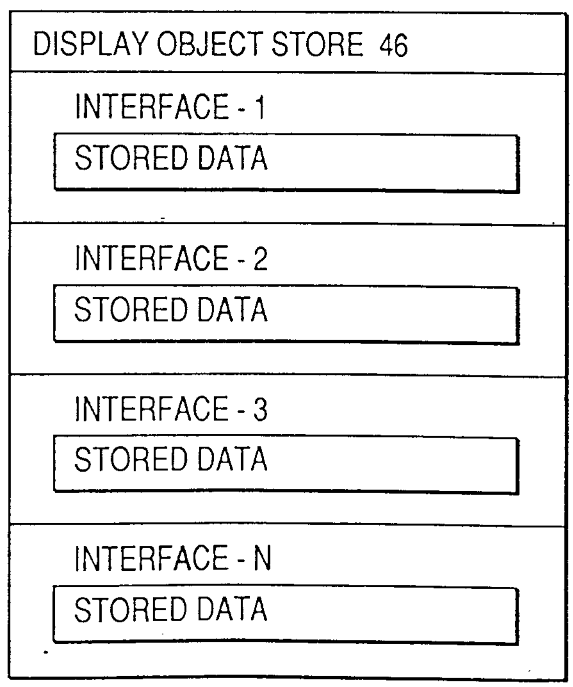
DISPLAY OBJECT STORE 46
INTERFACE - 1
STORED DATA
INTERFACE - 2
STORED DATA
INTERFACE - 3
STORED DATA
INTERFACE - N
STORED DATA

FIG. 4

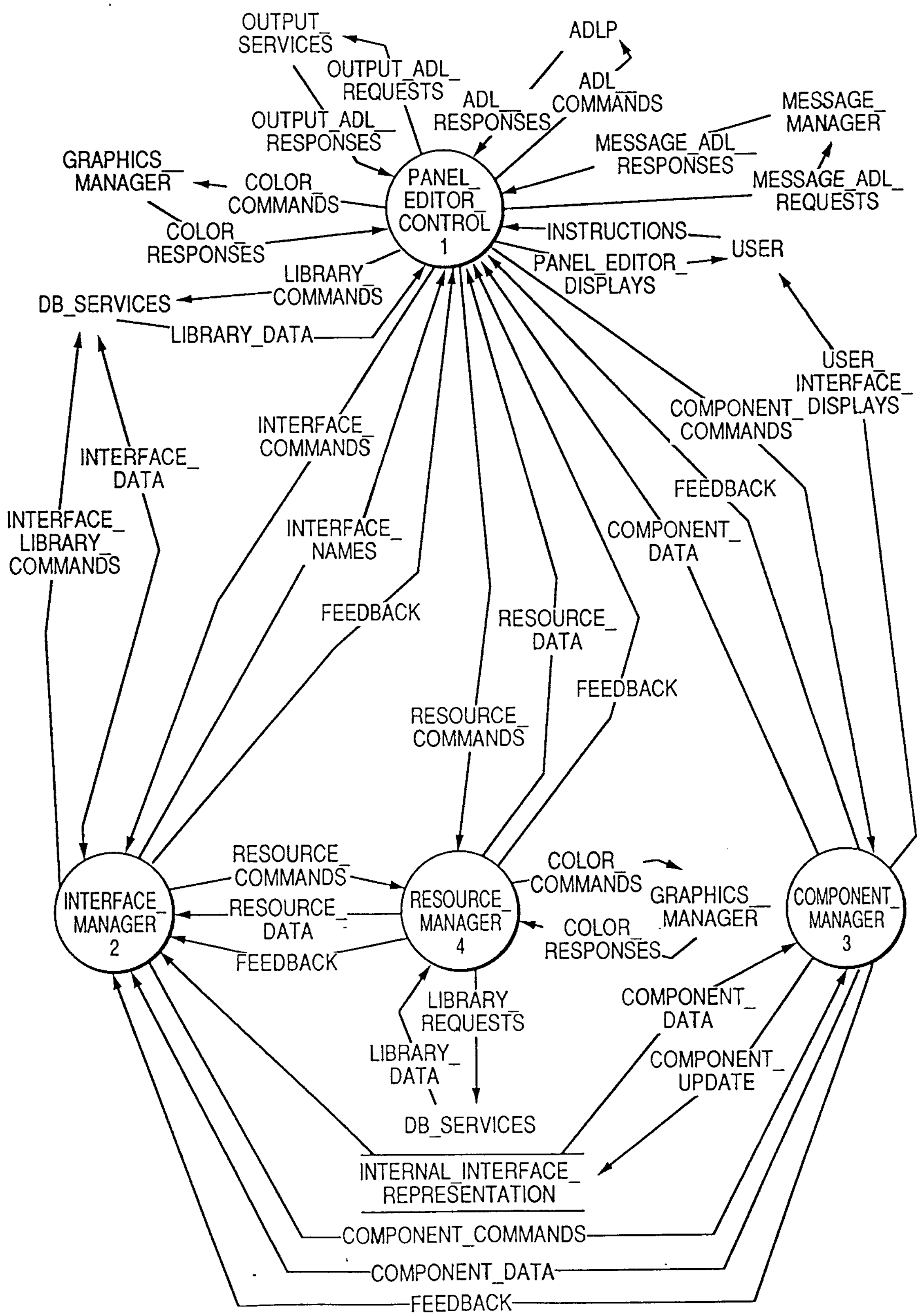

OUTPUT_SERVICES
ADLP
OUTPUT_ADL_REQUESTS
ADL_COMMANDS
OUTPUT_ADL_RESPONSES
ADL_RESPONSES
MESSAGE_MANAGER
MESSAGE_ADL_RESPONSES
GRAPHICS_MANAGER
COLOR_COMMANDS
PANEL_EDITOR_CONTROL 1
MESSAGE_ADL_REQUESTS
COLOR_RESPONSES
INSTRUCTIONS
USER
PANEL_EDITOR_DISPLAYS
LIBRARY_COMMANDS
DB_SERVICES
LIBRARY_DATA
USER_INTERFACE_DISPLAYS
COMPONENT_COMMANDS
INTERFACE_COMMANDS
INTERFACE_DATA
FEEDBACK
INTERFACE_LIBRARY_COMMANDS
INTERFACE_NAMES
COMPONENT_DATA
FEEDBACK
RESOURCE_DATA
FEEDBACK
RESOURCE_COMMANDS
RESOURCE_COMMANDS
COLOR_COMMANDS
GRAPHICS_MANAGER
INTERFACE_MANAGER 2
RESOURCE_DATA
RESOURCE_MANAGER 4
COLOR_RESPONSES
COMPONENT_MANAGER 3
FEEDBACK
LIBRARY_REQUESTS
COMPONENT_DATA
LIBRARY_DATA
COMPONENT_UPDATE
DB_SERVICES
INTERNAL_INTERFACE_REPRESENTATION
COMPONENT_COMMANDS
COMPONENT_DATA
FEEDBACK

FIG. 5

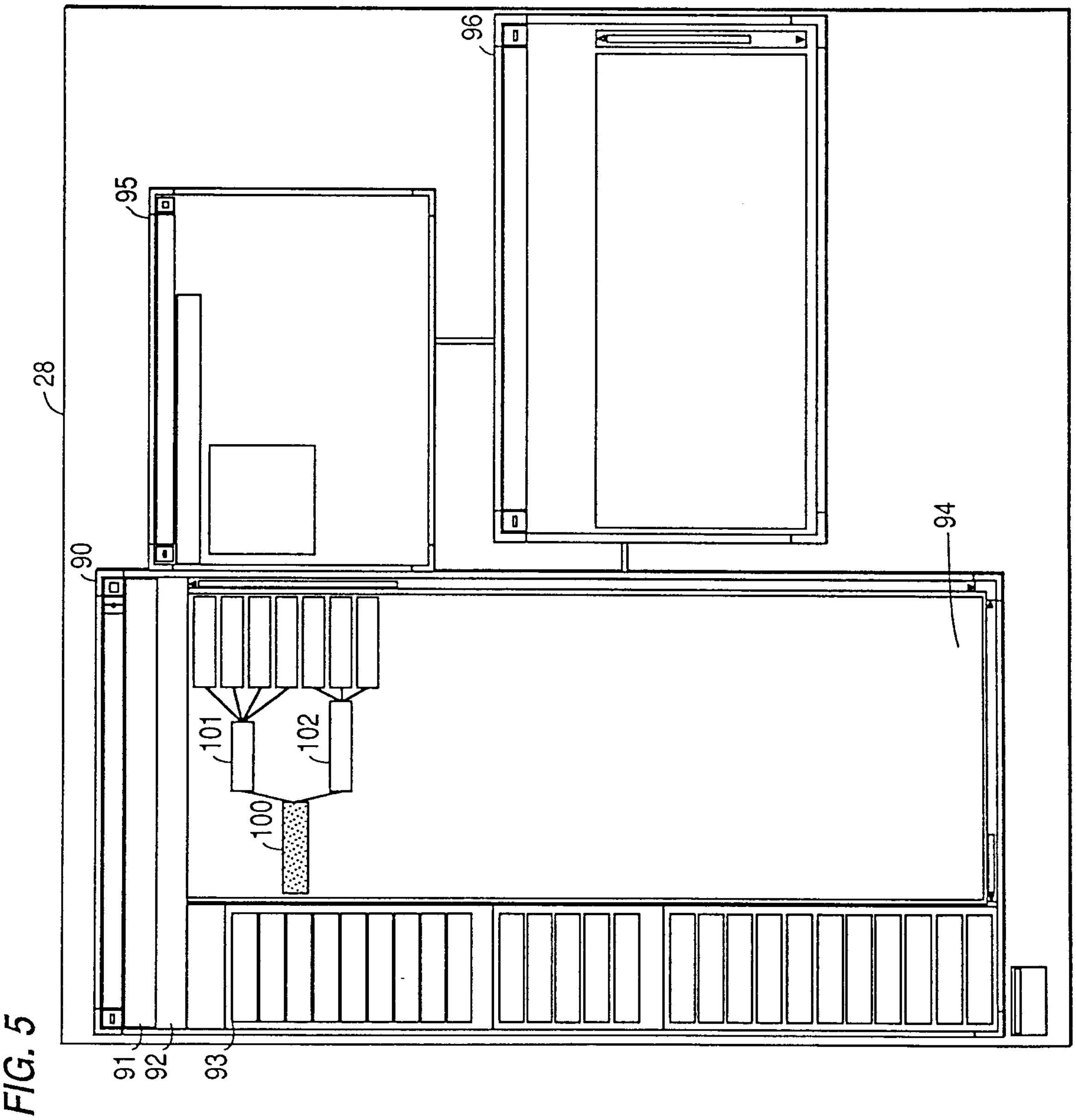

FIG. 6

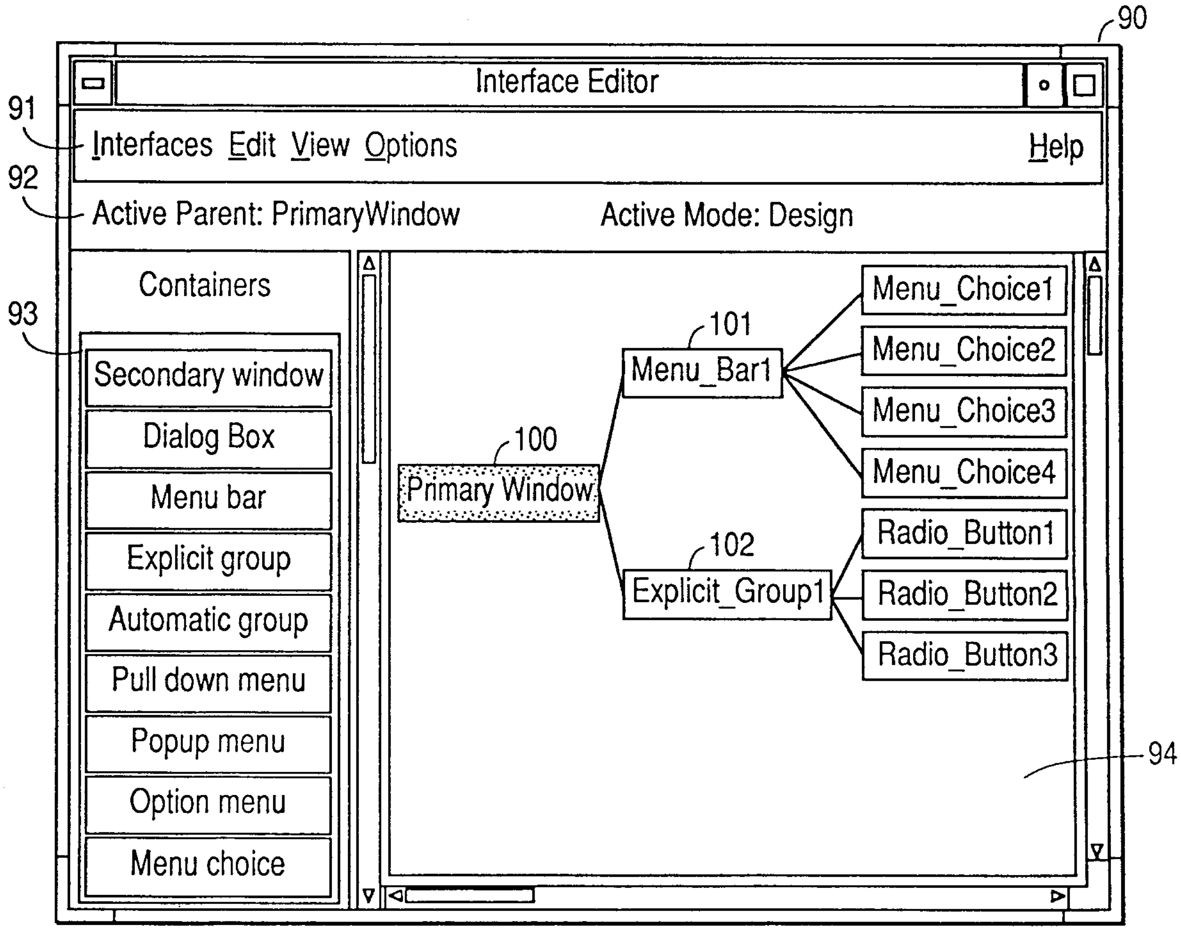
90
Interface Editor
91
Interfaces Edit View Options
Help
92
Active Parent: PrimaryWindow
Active Mode: Design
Containers
93
Secondary window
Dialog Box
Menu bar
Explicit group
Automatic group
Pull down menu
Popup menu
Option menu
Menu choice
100
Primary Window
101
Menu_Bar1
Menu_Choice1
Menu_Choice2
Menu_Choice3
Menu_Choice4
102
Explicit_Group1
Radio_Button1
Radio_Button2
Radio_Button3
94

FIG. 7

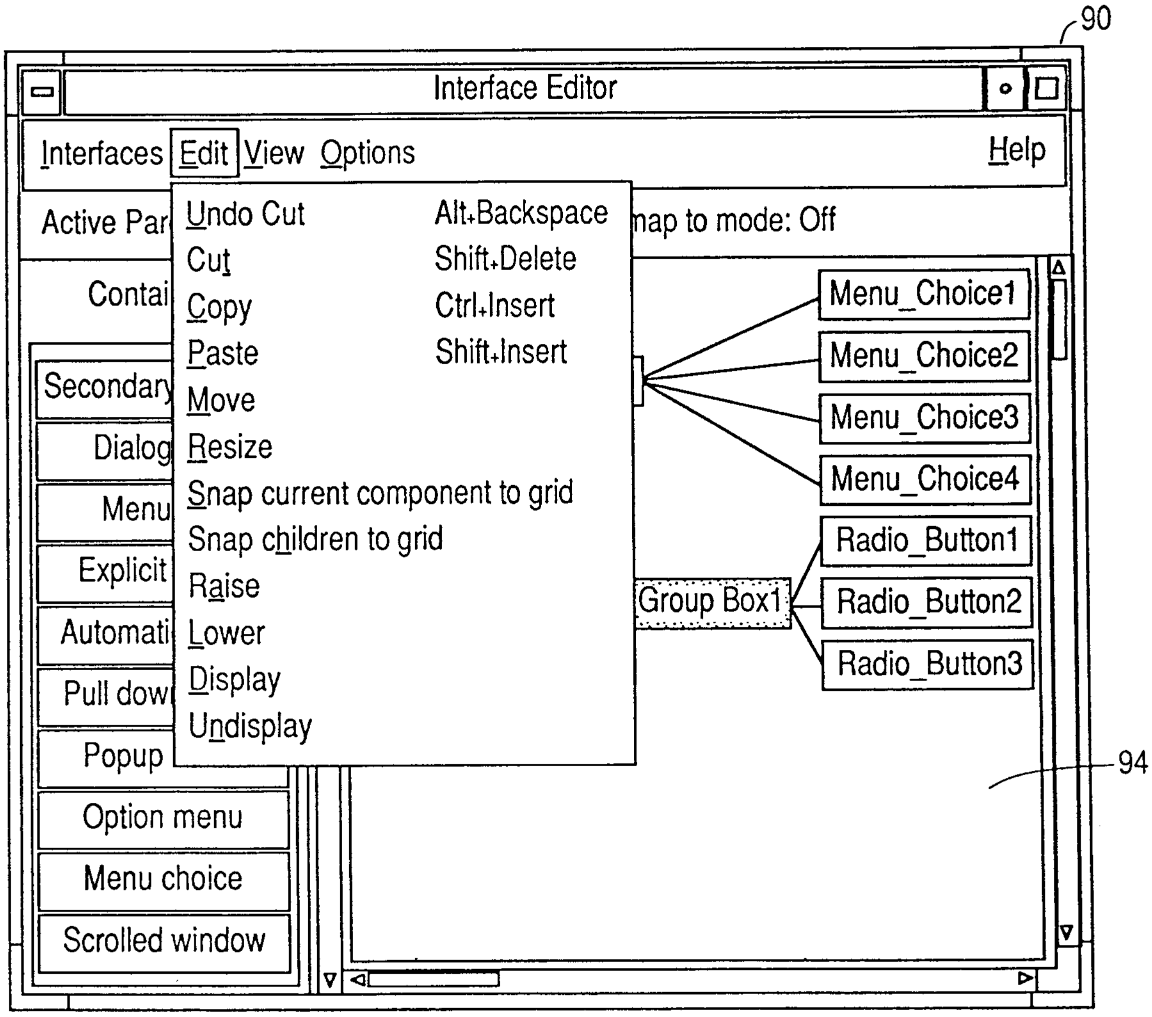
90
Interface Editor
Interfaces
Edit
View
Options
Help
Active Par
nap to mode: Off
Contai
Undo Cut
Alt+Backspace
Cut
Shift+Delete
Copy
Ctrl+Insert
Paste
Shift+Insert
Move
Resize
Snap current component to grid
Snap children to grid
Raise
Lower
Display
Undisplay
Secondary
Dialog
Menu
Explicit
Automati
Pull dow
Popup
Option menu
Menu choice
Scrolled window
Menu_Choice1
Menu_Choice2
Menu_Choice3
Menu_Choice4
Group Box1
Radio_Button1
Radio_Button2
Radio_Button3
94

FIG. 8

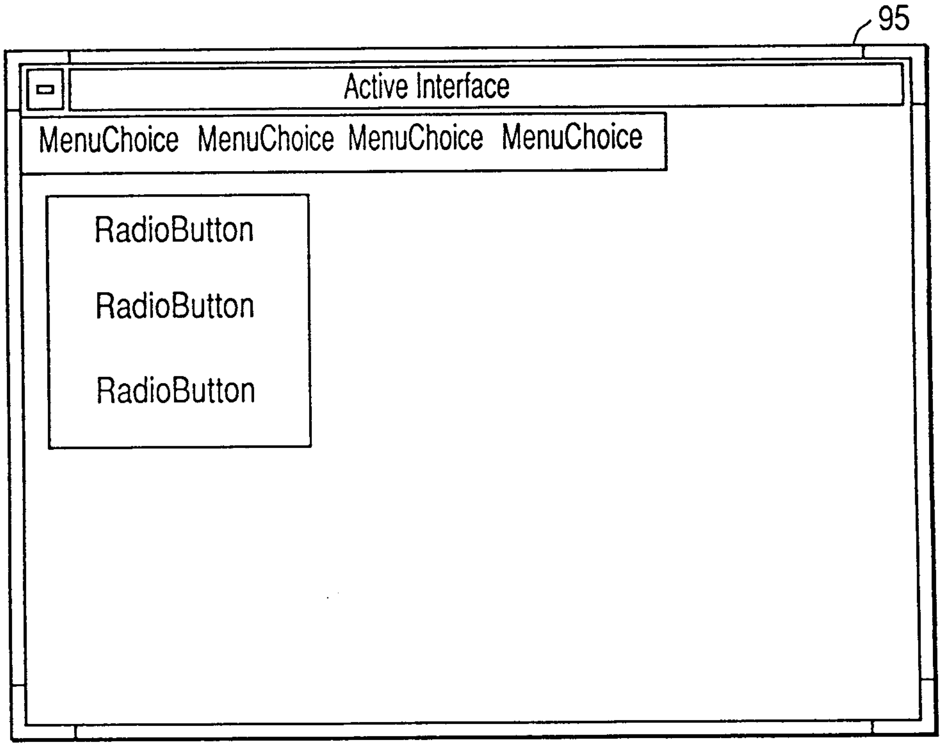
95
Active Interface
MenuChoice MenuChoice MenuChoice MenuChoice
RadioButton
RadioButton
RadioButton

FIG. 9

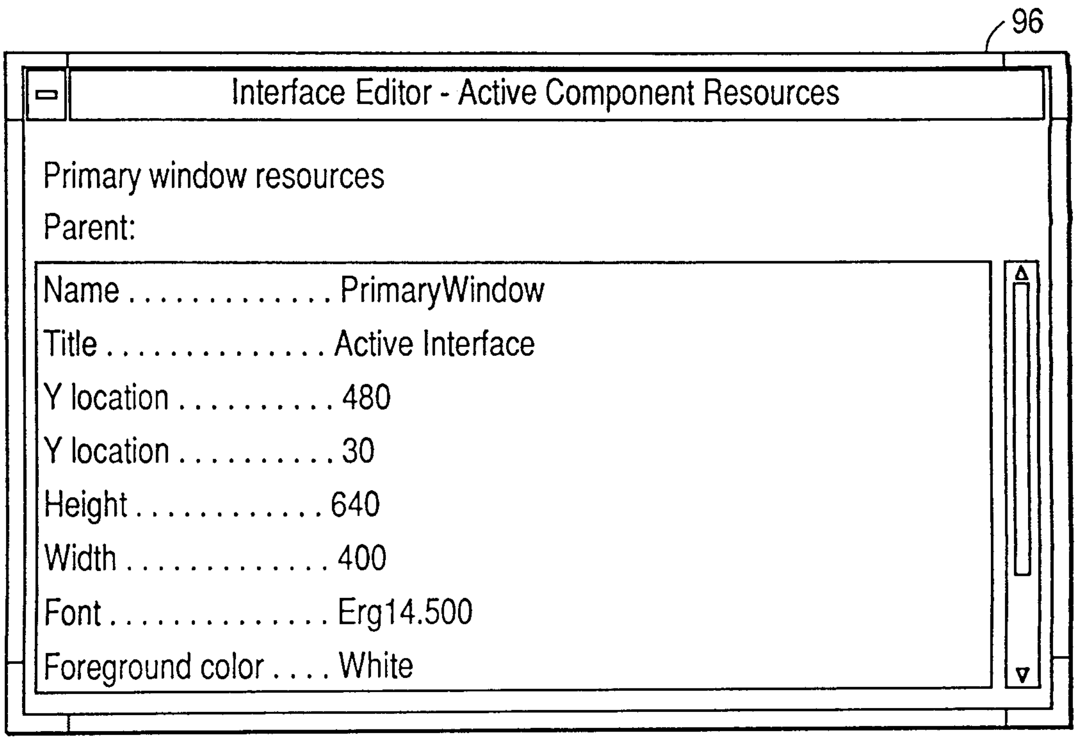
96
Interface Editor - Active Component Resources
Primary window resources
Parent:
Name . . . . . . . . . . . . . PrimaryWindow
Title . . . . . . . . . . . . . . Active Interface
Y location . . . . . . . . . . 480
Y location . . . . . . . . . . 30
Height . . . . . . . . . . . . 640
Width . . . . . . . . . . . . . 400
Font . . . . . . . . . . . . . . Erg14.500
Foreground color . . . . White

FIG. 10

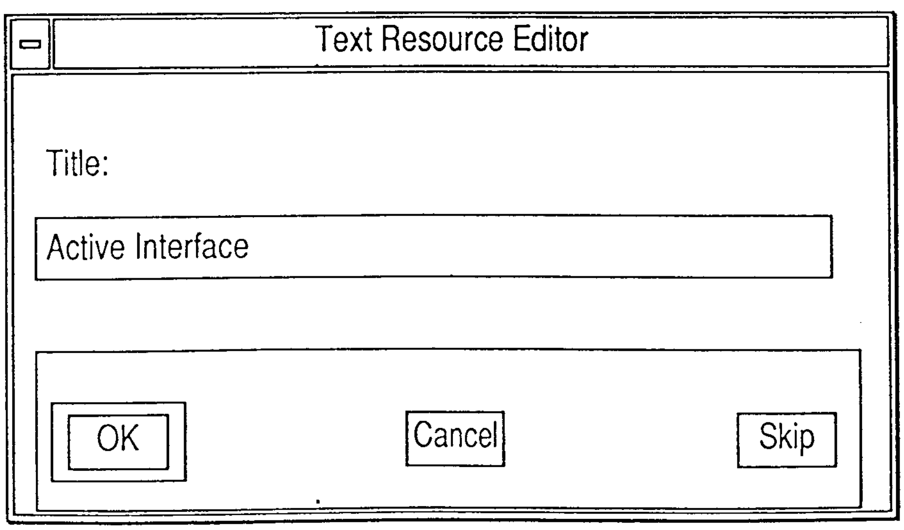
Text Resource Editor
Title:
Active Interface
OK
Cancel
Skip

FIG. 11

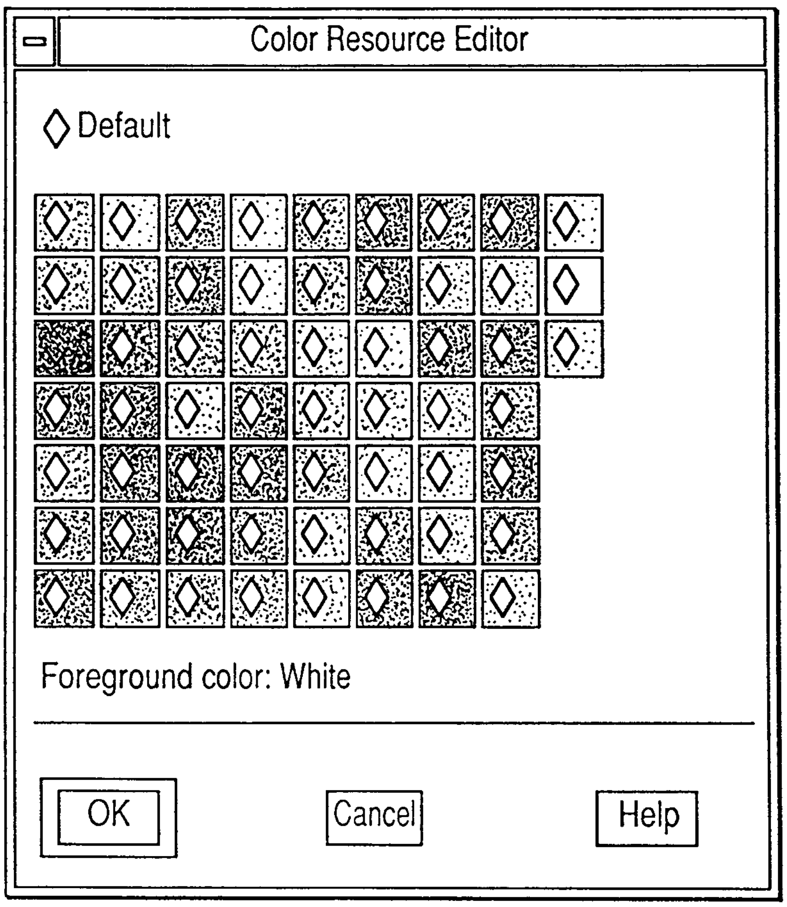
Color Resource Editor
Default
Foreground color: White
OK
Cancel
Help

FIG. 12

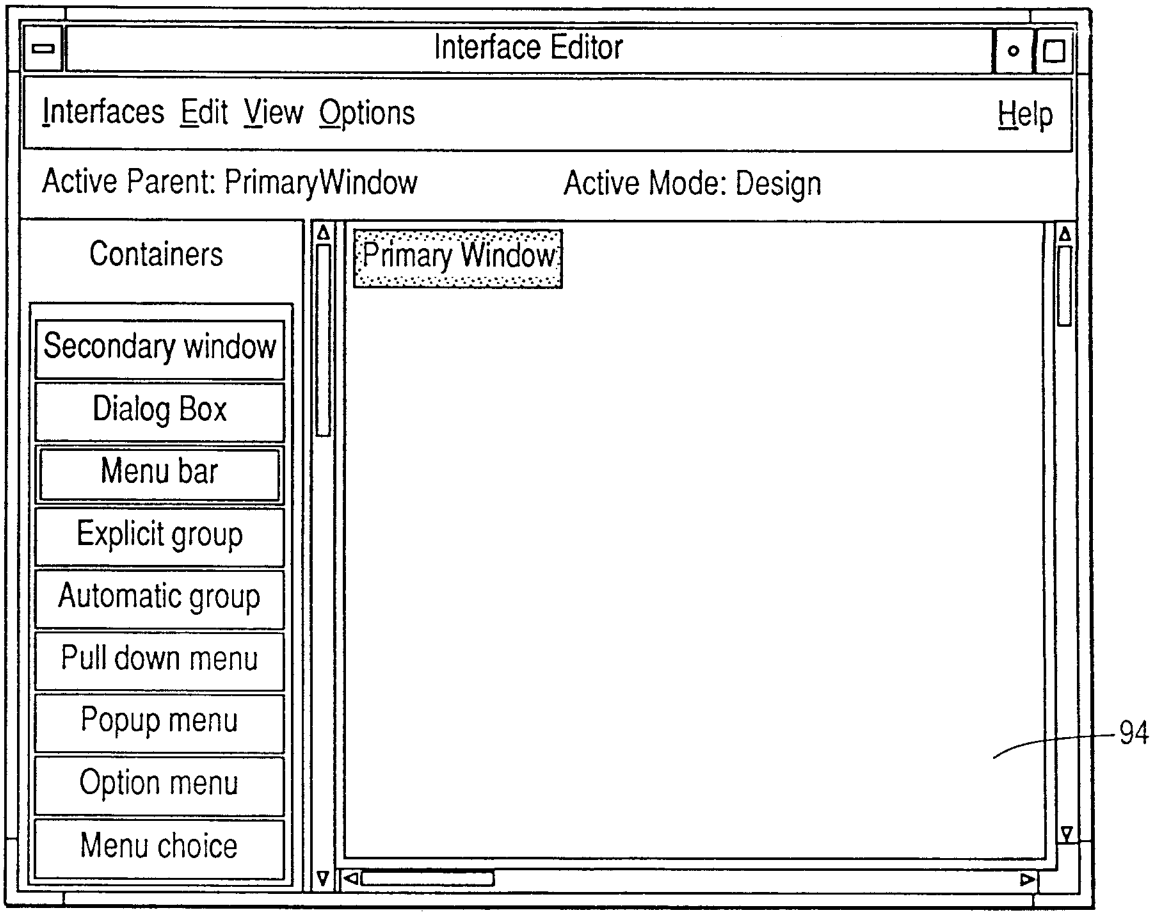
Interface Editor
Interfaces Edit View Options
Help
Active Parent: PrimaryWindow
Active Mode: Design
Containers
Primary Window
Secondary window
Dialog Box
Menu bar
Explicit group
Automatic group
Pull down menu
Popup menu
Option menu
Menu choice
94

FIG. 13

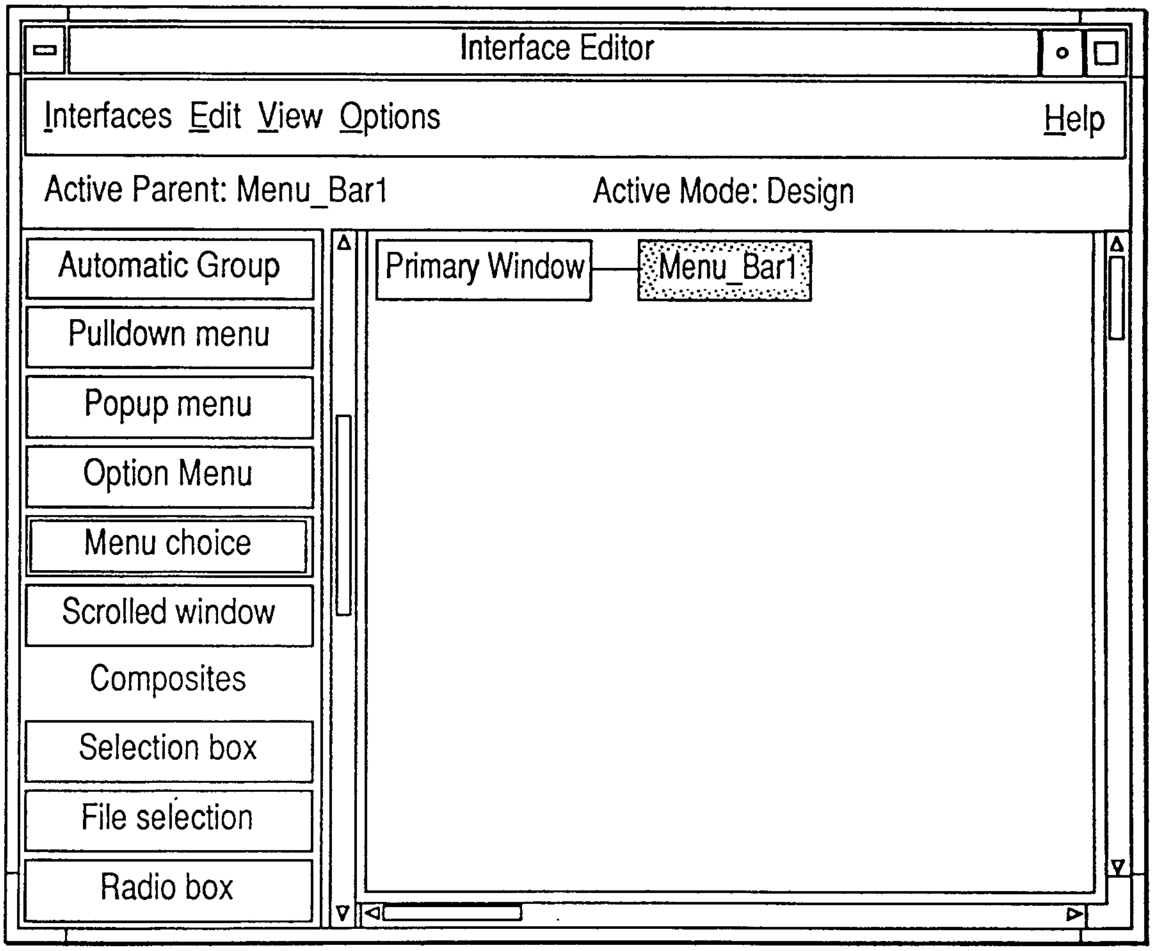
Interface Editor
Interfaces Edit View Options
Help
Active Parent: Menu_Bar1
Active Mode: Design
Automatic Group
Pulldown menu
Popup menu
Option Menu
Menu choice
Scrolled window
Composites
Selection box
File selection
Radio box
Primary Window
Menu_Bar1

FIG. 14

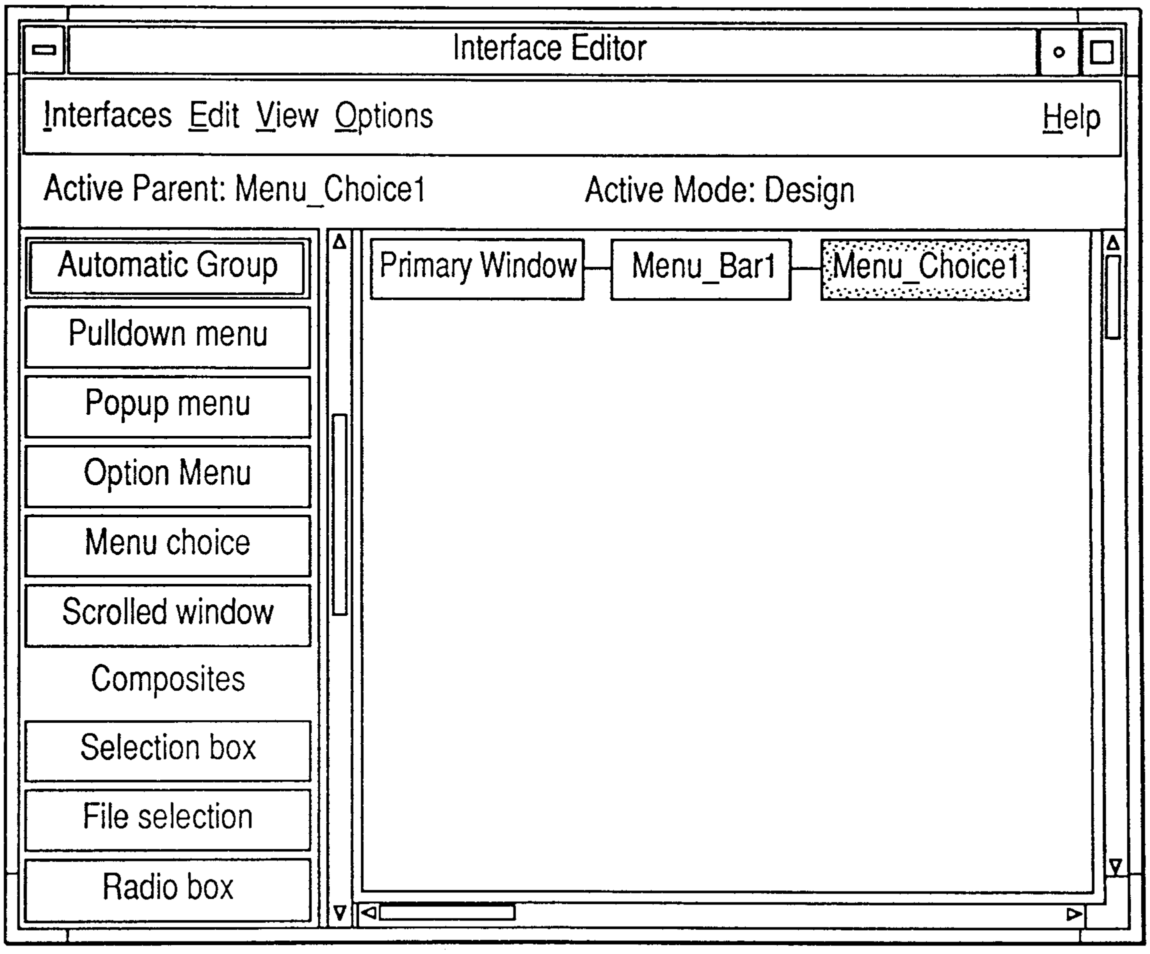
Interface Editor
Interfaces Edit View Options
Help
Active Parent: Menu_Choice1
Active Mode: Design
Automatic Group
Pulldown menu
Popup menu
Option Menu
Menu choice
Scrolled window
Composites
Selection box
File selection
Radio box
Primary Window
Menu_Bar1
Menu_Choice1

*FIG. 15*

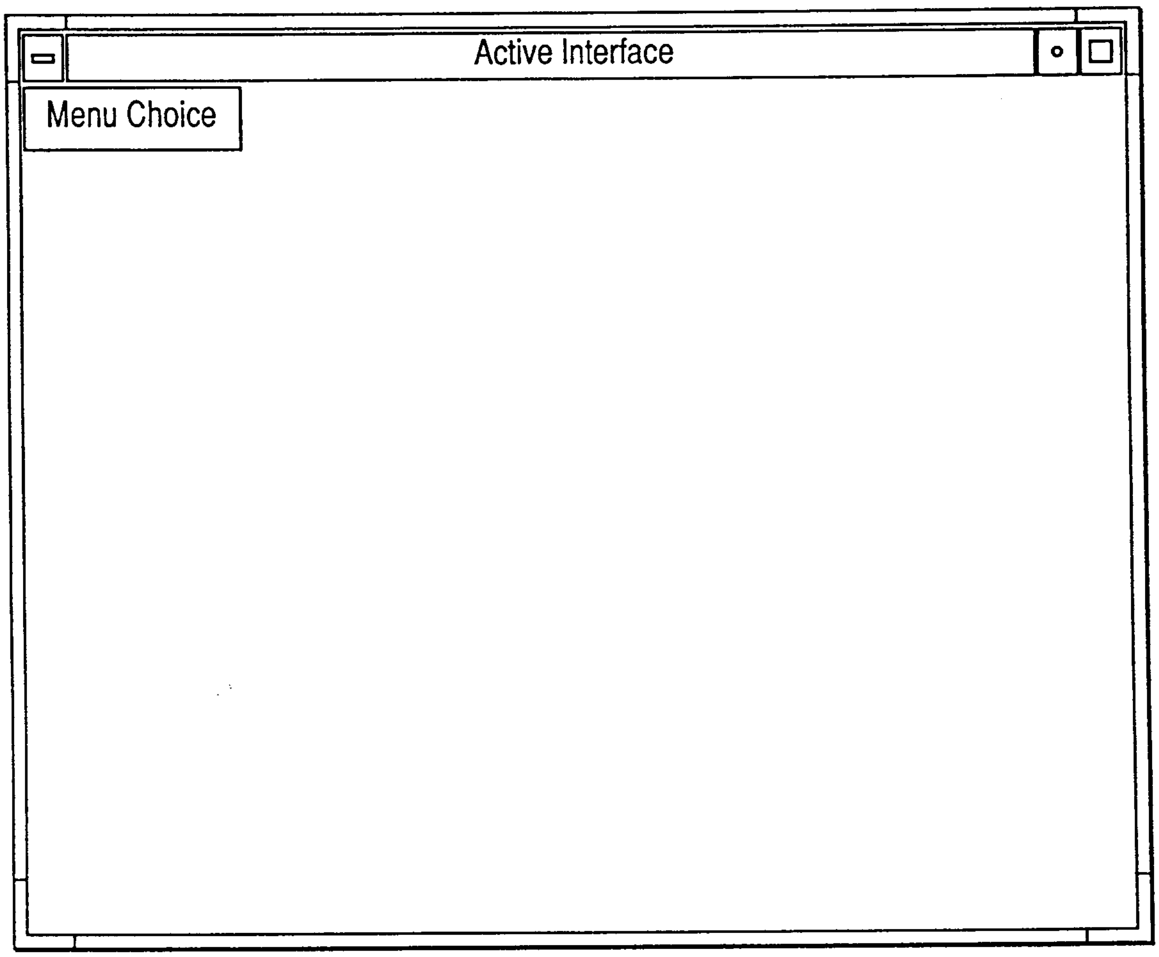

FIG. 16

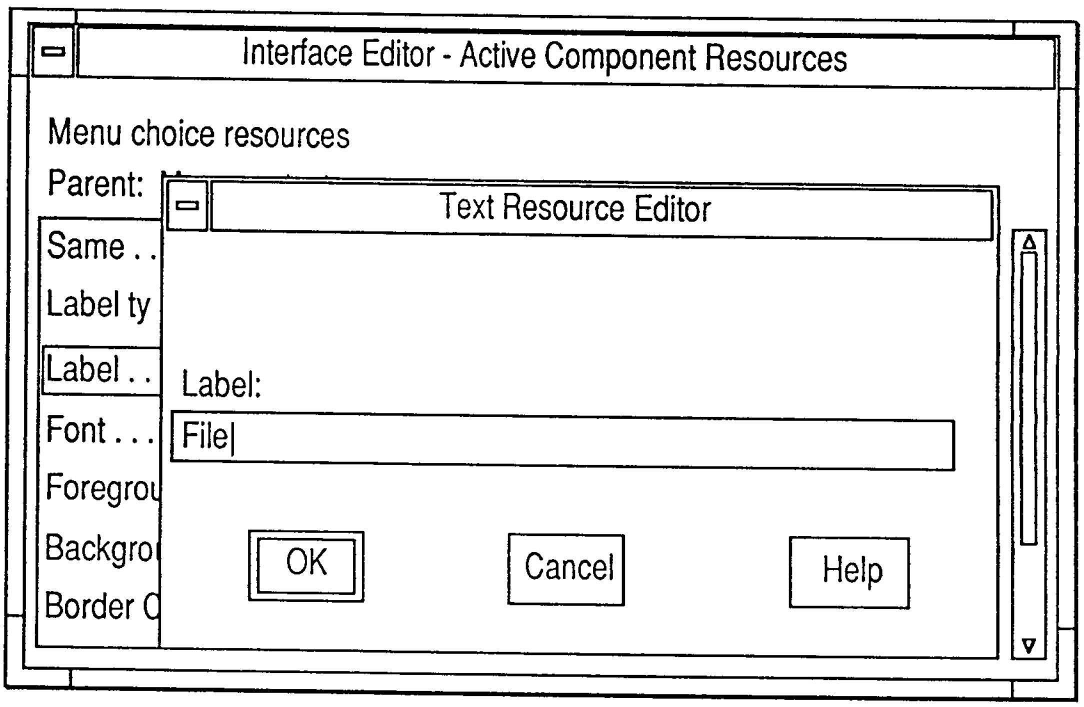
Interface Editor - Active Component Resources
Menu choice resources
Parent:
Same . .
Label ty
Label . .
Font . . .
Foregrou
Backgro
Border C
Text Resource Editor
Label:
File|
OK
Cancel
Help

FIG. 17

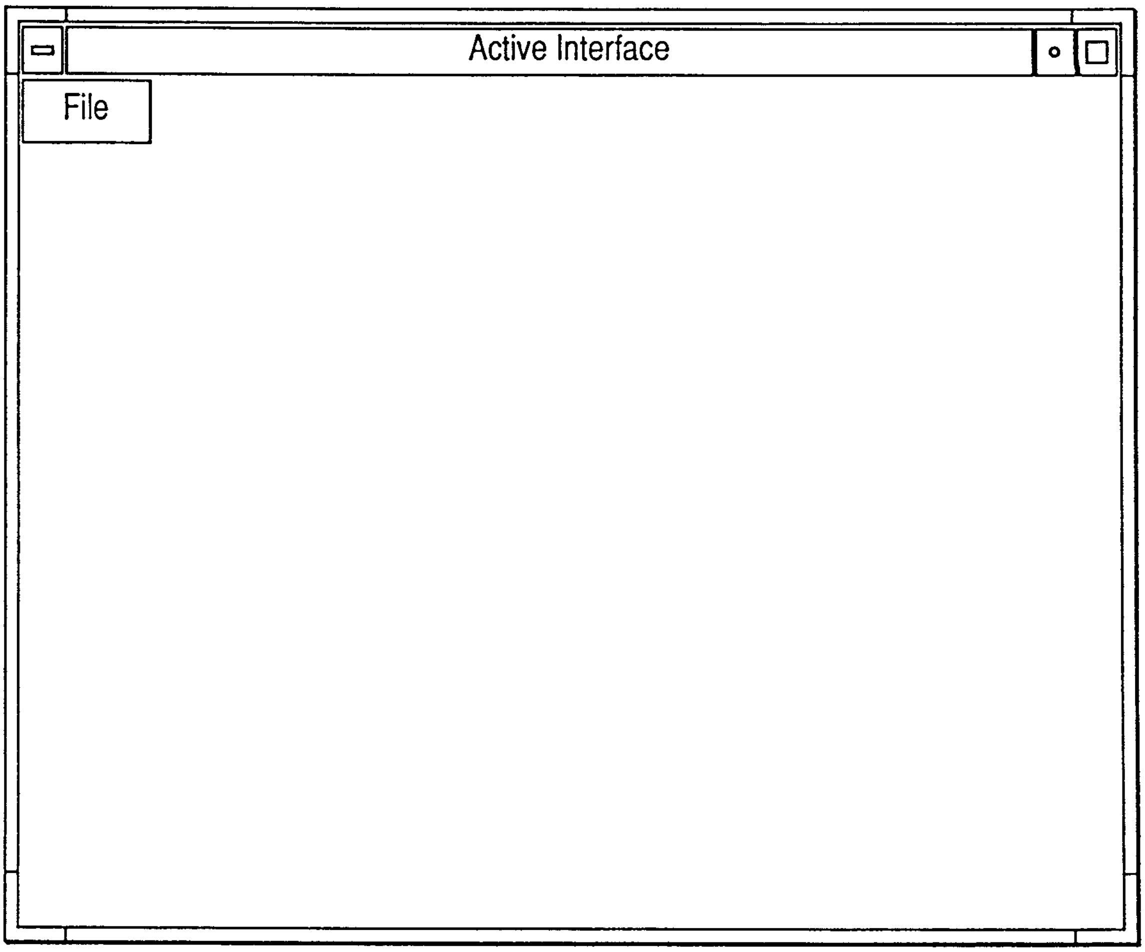

FIG. 18

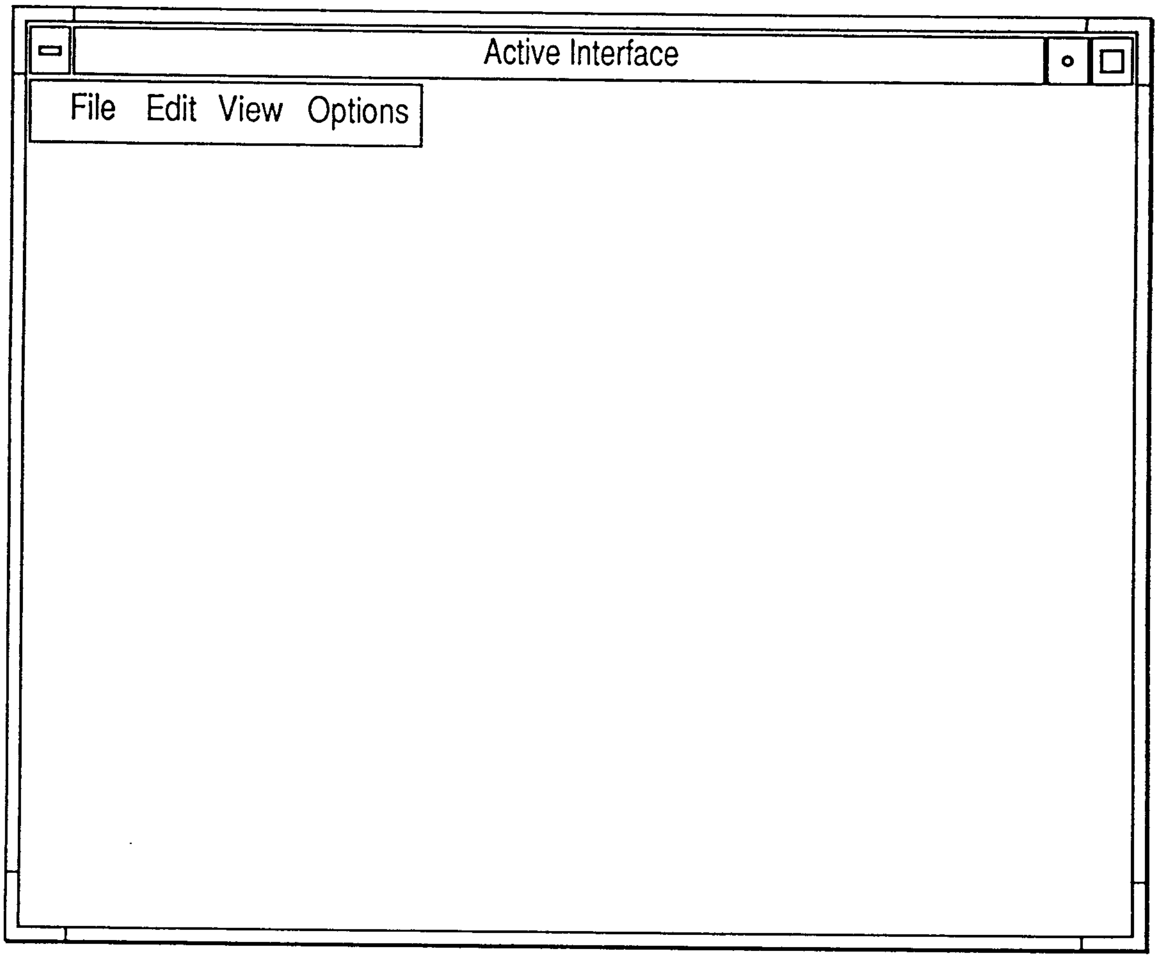

FIG. 19

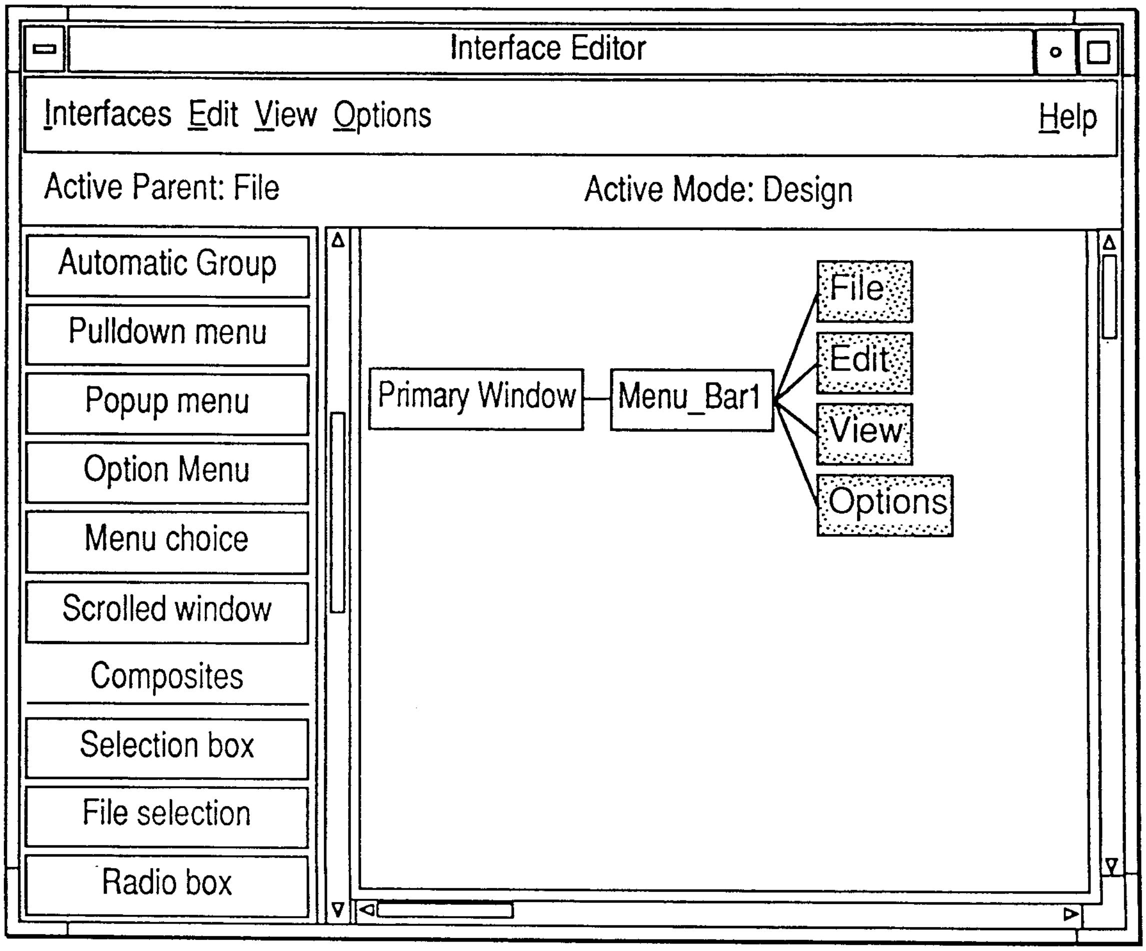
Interface Editor
Interfaces Edit View Options
Help
Active Parent: File
Active Mode: Design
Automatic Group
Pulldown menu
Popup menu
Option Menu
Menu choice
Scrolled window
Composites
Selection box
File selection
Radio box
Primary Window
Menu_Bar1
File
Edit
View
Options

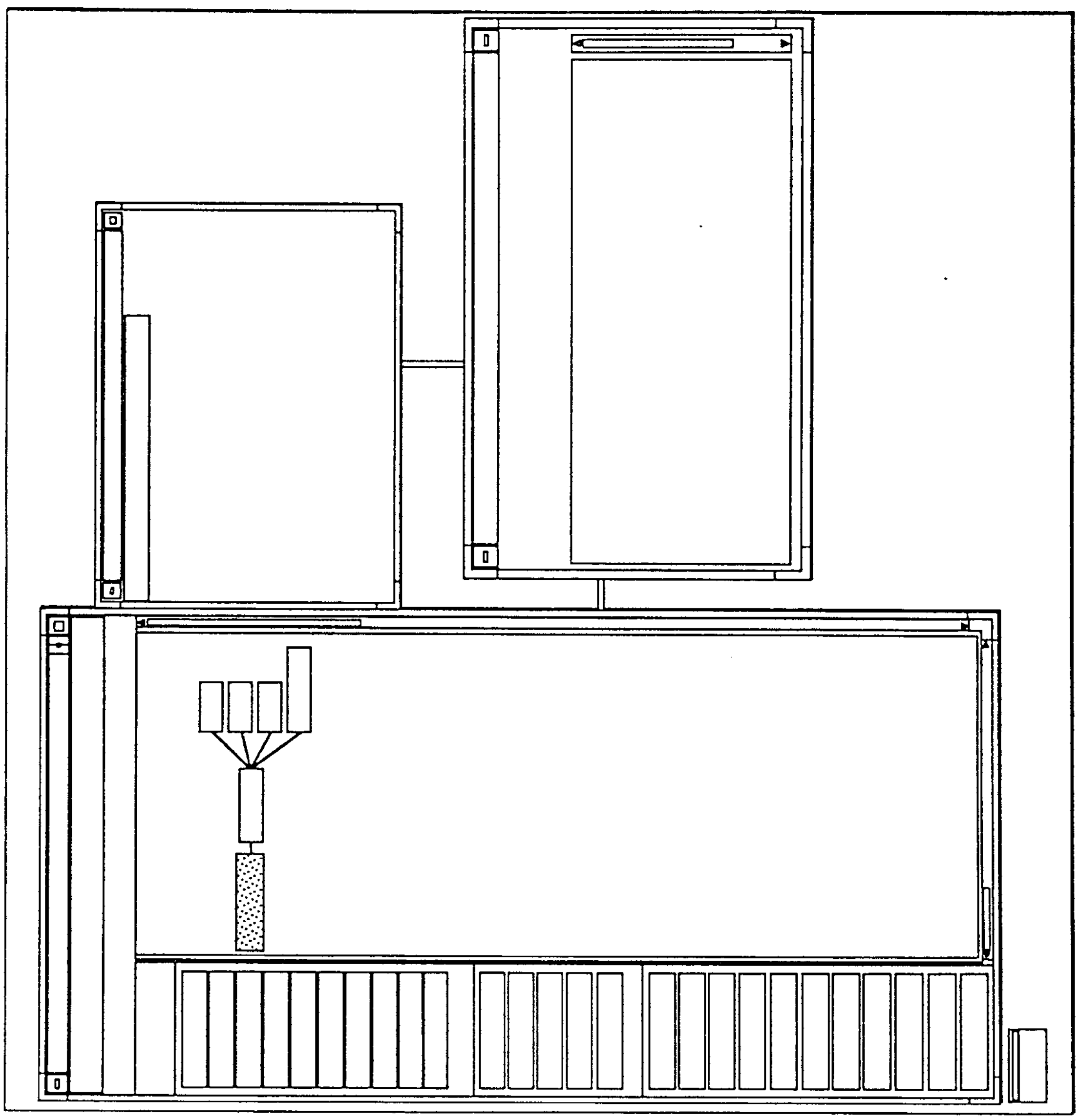

FIG. 20

FIG. 21

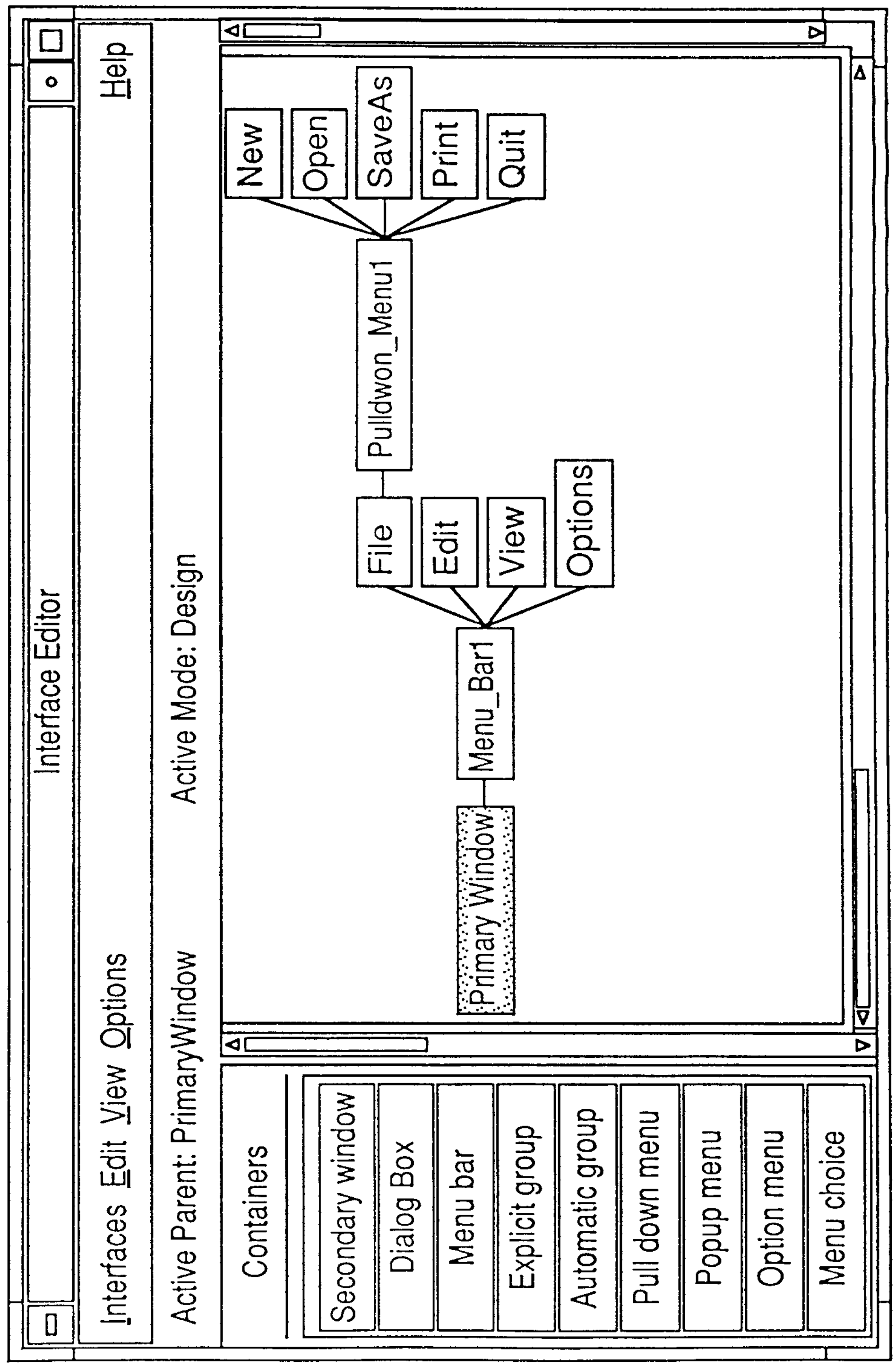
Interface Editor
Interfaces Edit View Options
Help
Active Parent: PrimaryWindow
Active Mode: Design
Containers
Secondary window
Dialog Box
Menu bar
Explicit group
Automatic group
Pull down menu
Popup menu
Option menu
Menu choice
Primary Window
Menu_Bar1
File
Edit
View
Options
Pulldwon_Menu1
New
Open
SaveAs
Print
Quit

FIG. 22

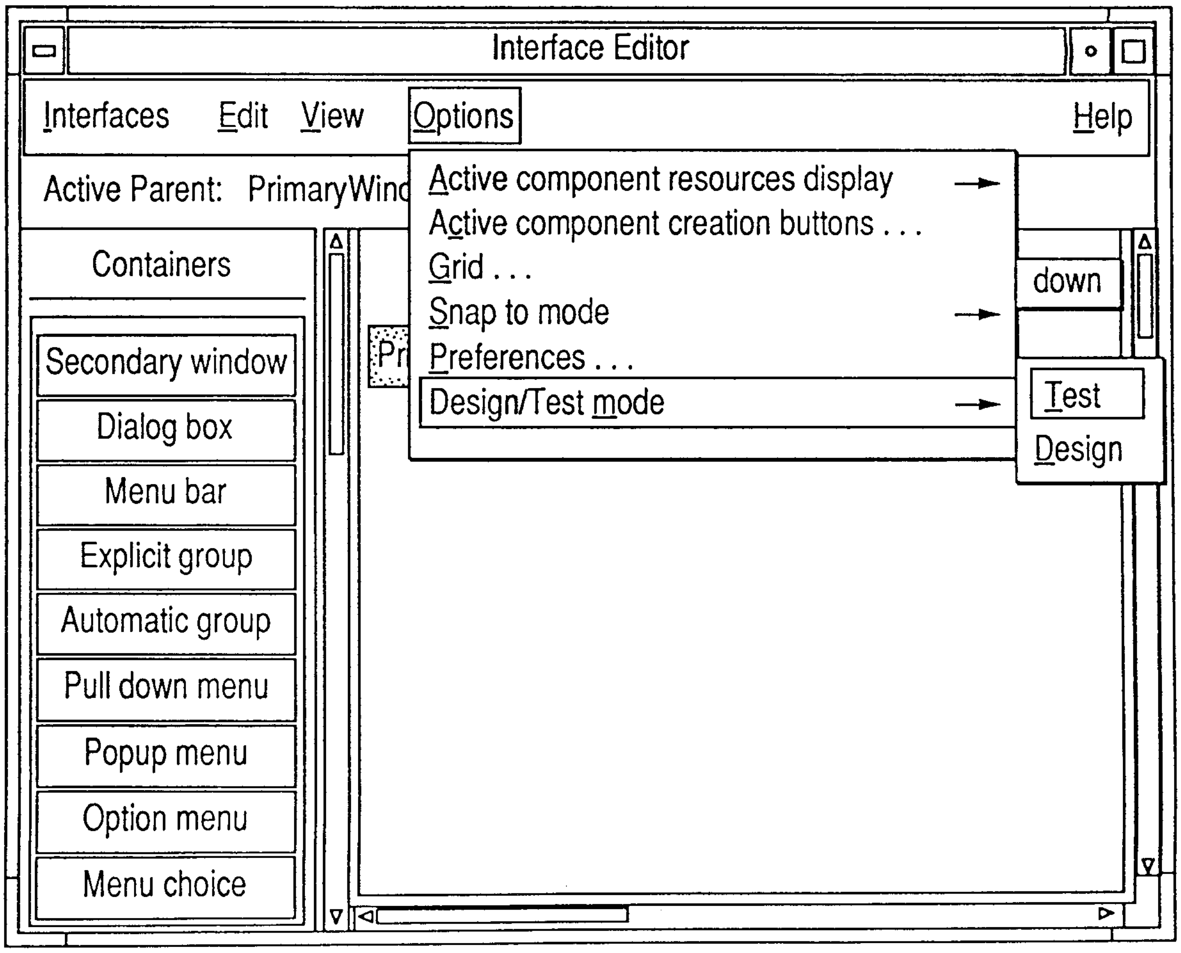
Interface Editor
Interfaces
Edit
View
Options
Help
Active Parent: PrimaryWind
Active component resources display
Active component creation buttons . . .
Grid . . .
Snap to mode
Preferences . . .
Design/Test mode
Test
Design
down
Containers
Pr
Secondary window
Dialog box
Menu bar
Explicit group
Automatic group
Pull down menu
Popup menu
Option menu
Menu choice

FIG. 23

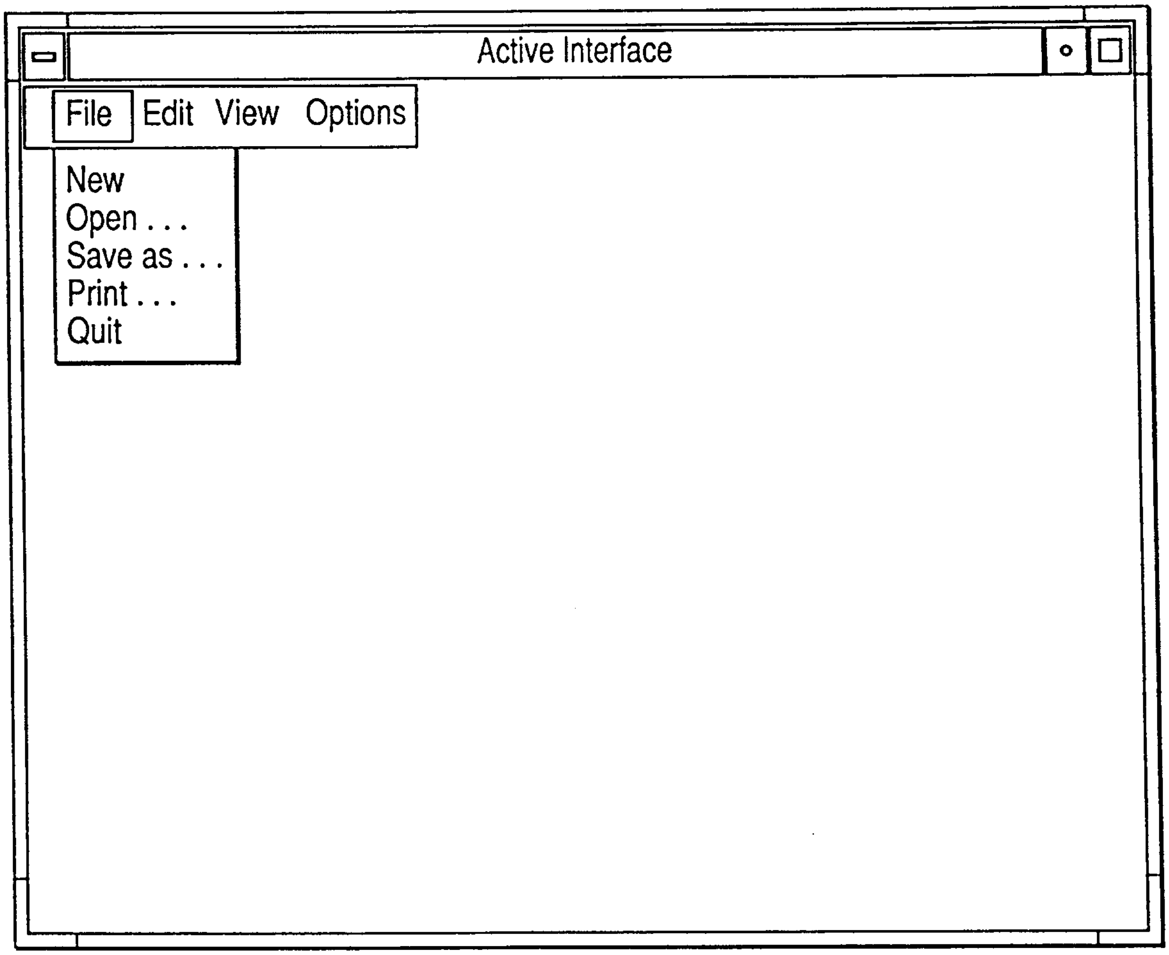
Active Interface
File
Edit
View
Options
New
Open . . .
Save as . . .
Print . . .
Quit

FIG. 24

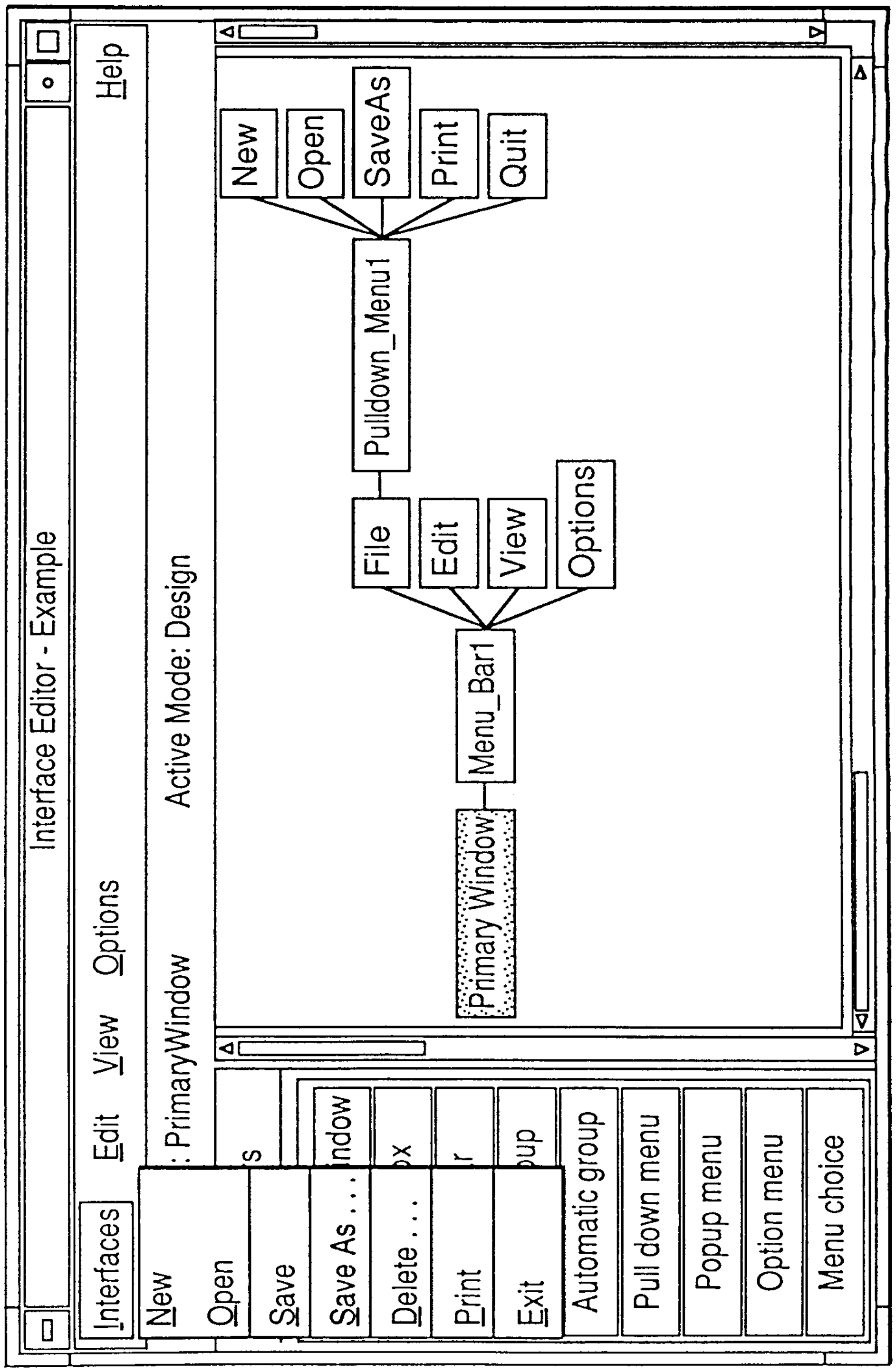
Interface Editor - Example
Interfaces
Edit
View
Options
Help
: PrimaryWindow
Active Mode: Design
New
Open
Save
Save As . . .
Delete . . .
Print
Exit
Automatic group
Pull down menu
Popup menu
Option menu
Menu choice
Primary Window
Menu_Bar1
File
Edit
View
Options
Pulldown_Menu1
New
Open
SaveAs
Print
Quit